# EUROPÄISCHE PATENTANMELDUNG

(11) **EP 4 814 461 A1**
(43) Veröffentlichungstag der Anmeldung: **30.09.2026**
(21) Anmeldenummer: 26164001.5
(22) Anmeldetag: 11.03.2026
(51) Int. Cl.: G01L 9/00, G01L 19/00, G01L 19/14

(54) **SENSOR ZUR MESSUNG EINES DRUCKS SOWIE VERFAHREN ZUR FERTIGUNG DIESES SENSORS**

(30) Priorität: 24.03.2025 EP 25165554
(71) Anmelder: Kistler Holding AG, 8408 Winterthur (CH)
(72) Erfinder: Heer, Christian, 8409 Winterthur (CH); Moosheer, Micha, 9527 Niederhelfenschwil (CH); Gramich, Joerg, 8308 Illnau (CH)

(57) **Zusammenfassung**

Die Erfindung betrifft einen Sensor zur Messung eines Drucks; mit einem inneren Gehäuseteil, einem Membranelement, einer Messeinheit und einer Durchführung; welches innere Gehäuseteil und welches Membranelement hohlzylinderförmig sind und einen Hohlraum umschliessen, welches innere Gehäuseteil in einer axialen Richtung durch ein erstes Gehäuseende und ein zweites Gehäuseende begrenzt ist, welches innere Gehäuseteil in einer radialen Richtung durch eine Gehäusewandung begrenzt ist; welches Membranelement am ersten Gehäuseende befestigt ist; welcher Hohlraum durch eine axiale Öffnung am ersten Gehäuseende in Längsrichtung vom inneren Gehäuseteil zum Membranelement reicht; welche Durchführung am zweiten Gehäuseende befestigt ist und den Hohlraum abschliesst; welches Membranelement eingerichtet ist, den zu messenden Druck in den Hohlraum zu leiten; welche Messeinheit im Hohlraum angeordnet ist, welche Messeinheit nach dem piezoresistivem Messprinzip arbeitet und eingerichtet ist, unter der Wirkung des eingeleiteten Drucks mindestens ein Messsignal zu erzeugen; welche Durchführung eingerichtet ist, das Messsignal aus dem Hohlraum nach ausserhalb des inneren Gehäusesteiles zu leiten.

## Beschreibung

### Technisches Gebiet

Die Erfindung betrifft einen Sensor zur Messung eines Drucks sowie ein Verfahren zur Fertigung dieses Sensors nach den Oberbegriffen der unabhängigen Ansprüche.

### Stand der Technik

Sensoren zur Messung des Drucks eines Mediums sind bekannt. So beschreibt die WO2008/025182A2 einen Sensor zur Messung des Drucks eines Mediums. Der Sensor weist ein Sensorgehäuse und eine Messeinheit auf. Das Sensorgehäuse ist zylinderförmig und umschliesst einen Hohlraum. Die Messeinheit ist im Hohlraum angeordnet. Das Sensorgehäuse weist eine Messöffnung auf, durch welche das Medium in den Hohlraum zur Messeinheit gelangt. Zum Schutz gegen das Medium ist die Messeinheit durch eine Deckschicht vom Medium getrennt. Der Druck des Mediums wirkt über die Deckschicht auf die Messeinheit. Unter der Wirkung des Drucks erzeugt die Messeinheit ein Messsignal. Die Messeinheit ist ein nach dem piezoresistivem Messprinzip arbeitender SOI (Silicon-On-Insulator) Chip. Die Messeinheit weist ein Tragelement auf. Auf einer der Deckschicht zugewandten Seite des Tragelementes sind elektrische Widerstandselemente und elektrische Leitelemente angeordnet. Durch das Tragelement hindurch erstrecken sich Durchkontaktierungen. Auf einer von der Deckschicht abgewandten Seite des Tragelementes sind die Durchkontaktierungen elektrisch mit Zuleitungen im Hohlraum verbunden. Über die Durchkontaktierungen und die Zuleitungen wird das Messsignal abgeleitet und der Messeinheit wird eine Betriebsspannung zum Betrieb der Messeinheit zugeleitet.

Eine erste Aufgabe der vorliegenden Erfindung ist es, den Aufbau des aus der WO2008/025182A2 bekannten Sensors zur Messung eines Drucks zu vereinfachen. Die Erfindung stellt sich die weitere Aufgabe, ein kostengünstiges Verfahren zur Fertigung dieses Sensors aufzuzeigen.

### Darstellung der Erfindung

Diese Aufgaben werden durch die Merkmale der unabhängigen Ansprüche gelöst.

Die Erfindung betrifft einen Sensor zur Messung eines Drucks; mit einem inneren Gehäuseteil, einem Membranelement, einer Messeinheit und einer Durchführung; welches innere Gehäuseteil und welches Membranelement hohlzylinderförmig sind und einen Hohlraum umschliessen, welches innere Gehäuseteil in einer axialen Richtung durch ein erstes Gehäuseende und ein zweites Gehäuseende begrenzt ist, welches innere Gehäuseteil in einer radialen Richtung durch eine Gehäusewandung begrenzt ist; welches Membranelement am ersten Gehäuseende befestigt ist; welcher Hohlraum durch eine axiale Öffnung am ersten Gehäuseende in der axialen Richtung vom inneren Gehäuseteil zum Membranelement reicht; welche Durchführung am zweiten Gehäuseende befestigt ist und den Hohlraum abschliesst; welches Membranelement eingerichtet ist, den zu messenden Druck in den Hohlraum zu leiten; welche Messeinheit im Hohlraum angeordnet ist, welche Messeinheit nach dem piezoresistivem Messprinzip arbeitet und eingerichtet ist, unter der Wirkung des eingeleiteten Drucks mindestens ein Messsignal zu erzeugen; welche Durchführung eingerichtet ist, das Messsignal aus dem Hohlraum nach ausserhalb des inneren Gehäusesteiles zu leiten; wobei die Messeinheit einen Tragkörper, eine erste Messschaltung und eine zweite Messschaltung aufweist; wobei der Tragkörper eine erste Tragfläche und eine zweite Tragfläche aufweist, welche erste Tragfläche die erste Messschaltung trägt und welche zweite Tragfläche die zweite Messschaltung trägt; wobei die erste Tragfläche eine erste Tragflächennormale aufweist; wobei die zweite Tragfläche eine zweite Tragflächennormale aufweist; wobei die Tragflächennormalen in einem Winkel grösser Null zueinander stehen; wobei der Sensor Leitungselemente aufweist; und wobei die beiden Messschaltungen der Messeinheit mittels der Leitungselemente mit der Durchführung elektrisch kontaktiert werden.

Die Erfindung betrifft auch ein Verfahren zur Fertigung eines Sensor zur Messung eines Drucks; mit einem inneren Gehäuseteil, einem Membranelement, einer Messeinheit und einer Durchführung; welches innere Gehäuseteil und welches Membranelement hohlzylinderförmig sind und einen Hohlraum umschliessen; welches innere Gehäuseteil in einer axialen Richtung durch ein erstes Gehäuseende und ein zweites Gehäuseende begrenzt ist, welches innere Gehäuseteil in einer radialen Richtung durch eine Gehäusewandung begrenzt ist; welches Membranelement am ersten Gehäuseende befestigt ist; welcher Hohlraum durch eine axiale Öffnung am ersten Gehäuseende vom inneren Gehäuseteil zum Membranelement reicht; welche Durchführung am zweiten Gehäuseende befestigt ist und den Hohlraum abschliesst; welches Membranelement eingerichtet ist, den zu messenden Druck in den Hohlraum zu leiten; welche Messeinheit im Hohlraum angeordnet ist, welche Messeinheit nach dem piezoresistivem Messprinzip arbeitet und eingerichtet ist, unter der Wirkung des eingeleiteten Drucks mindestens ein Messsignal zu erzeugen; welche Durchführung eingerichtet ist, das Messsignal aus dem Hohlraum nach ausserhalb des inneren Gehäusesteiles zu leiten; wobei in einem ersten Schritt das innere Gehäuseteil, das Membranelement, die Messeinheit und die Durchführung bereitgestellt werden; wobei in einem zweiten Schritt die Messeinheit durch die axiale Öffnung am ersten Gehäuseende in der axialen Richtung in den Hohlraum geschoben wird; wobei in einem dritten Schritt das Membranelement am ersten Gehäuseende befestigt wird; wobei in einem vierten Schritt Leitungselemente bereitgestellt werden; wobei die Messeinheit einen Tragkörper, eine erste Messschaltung und eine zweite Messschaltung aufweist, welcher Tragkörper eine erste Tragfläche und eine zweite Tragfläche aufweist, welche erste Tragfläche die erste Messschaltung trägt und welche zweite Tragfläche die zweite Messschaltung trägt, welche erste Tragfläche eine erste Tragflächennormale aufweist, welche zweite Tragfläche eine zweite Tragflächennormale aufweist, welche Tragflächennormalen in einem Winkel grösser Null zueinander stehen und wobei in einem fünften Schritt die beiden Messschaltungen der Messeinheit mittels der Leitungselemente mit der Durchführung elektrisch kontaktiert werden.

Vorteilhafte Weiterbildungen der Erfindung sind in den abhängigen Ansprüchen geschützt.

### Kurze Beschreibung der Zeichnungen

Im Folgenden wird die Erfindung anhand zweier beispielhafter Ausführungsformen unter Beizug der Figuren näher erklärt. Es zeigen
- Fig. 1: eine Ansicht eines Teiles einer ersten Ausführungsform eines Sensors 10 mit einer Messeinheit 3, einer Ableiteinheit 5 und einer Durchführung 4 zur Messung eines Drucks P;
- Fig. 2: eine Ansicht eines Teiles einer zweiten Ausführungsform eines Sensors 10 mit einer Messeinheit 3, einer Ableiteinheit 5 und einer Durchführung 4 zur Messung eines Drucks P;
- Fig. 3: ein Schnitt durch einen Teil der ersten Ausführungsform des Sensors 10 gemäss Fig. 1 in einer Darstellung in einer Vertikalebene XZ;
- Fig. 4: ein Schnitt durch einen Teil der zweiten Ausführungsform des Sensors 10 gemäss Fig. 2 in einer Darstellung in der Vertikalebene XZ;
- Fig. 5: eine vergrösserte Ansicht eines Teiles einer ersten Messeinrichtung 3.2 der Messeinheit 3 des Sensors 10 der beiden Ausführungsformen gemäss Fig. 1 bis 4 in einer Darstellung in einer Querebene XY;
- Fig. 6: eine vergrösserte Ansicht eines Teiles einer zweiten Messeinrichtung 3.3 der Messeinheit 3 des Sen- sors 10 der beiden Ausführungsformen gemäss Fig. 1 bis 4 in einer Darstellung in der Querebene XY;
- Fig. 7: eine vergrösserte Ansicht eines Teiles einer ersten Ausführungsform der Ableiteinheit 5 des Sensors 10 der ersten Ausführungsform gemäss Fig. 1 und 3 in einer Darstellung in der Querebene XY;
- Fig. 8: eine vergrösserte Ansicht eines Teiles einer zweiten Ausführungsform der Ableiteinheit 5 des Sensors 10 der zweiten Ausführungsform gemäss Fig. 2 und 4 in einer Darstellung in der Querebene XY;
- Fig. 9: eine schematische Darstellung der elektrischen Verschaltung der ersten Ausführungsform des Sensors 10 gemäss Fig. 1 mit der ersten Ausführungsform der Ableiteinheit 5 gemäss Fig. 7;
- Fig. 10: eine schematische Darstellung der elektrischen Verschaltung der zweiten Ausführungsform des Sensors 10 gemäss Fig. 2 mit der zweiten Ausführungsform der Ableiteinheit 5 gemäss Fig. 8;
- Fig. 11: ein Schnitt durch ein äusseres Gehäuseteil 7 des Sensors 10 der beiden Ausführungsformen gemäss Fig. 1 bis 4 in einer Darstellung in der Querebene XY;
- Fig. 12: ein Schnitt in Explosion des Sensors 10 der ersten Ausführungsform gemäss Fig. 1 und 3 mit einem inneren Gehäuseteil 1, einem Membranelement 2, der Messeinheit 3, der ersten Ausführungsform der Ableiteinheit 5 gemäss Fig. 7, der Durchführung 4 und ei- nem Übertragungselement 6 in einer Darstellung in der Querebene XY;
- Fig. 13: ein Schnitt durch einen Teil des Sensors 10 gemäss Fig. 12 mit dem äusseren Gehäuseteil 7 gemäss Fig. 11 nach der Fertigung in einer Darstellung in der Vertikalebene XZ;
- Fig. 14: ein Schnitt in Explosion des Sensors 10 der zweiten Ausführungsform gemäss Fig. 2 und 4 mit einem inneren Gehäuseteil 1, einem Membranelement 2, der Messeinheit 3, der zweiten Ausführungsform der Ableiteinheit 5 gemäss Fig. 8, der Durchführung 4 und einem Übertragungselement 6 in einer Darstellung in der Querebene XY; und
- Fig. 15: ein Schnitt durch einen Teil des Sensors 10 gemäss Fig. 14 mit dem äusseren Gehäuseteil 7 gemäss Fig. 11 nach der Fertigung in einer Darstellung in der Vertikalebene XZ.

Gleiche Bezugszeichen bezeichnen in den Figuren gleiche Gegenstände.

### Wege zur Ausführung der Erfindung

Der Sensor 10 weist ein inneres Gehäuseteil 1, ein Membranelement 2, eine Messeinheit 3, eine Durchführung 4, eine Ableiteinheit 5, ein Übertragungselement 6, ein äusseres Gehäuseteil 7 und ein Kabel 8 auf.

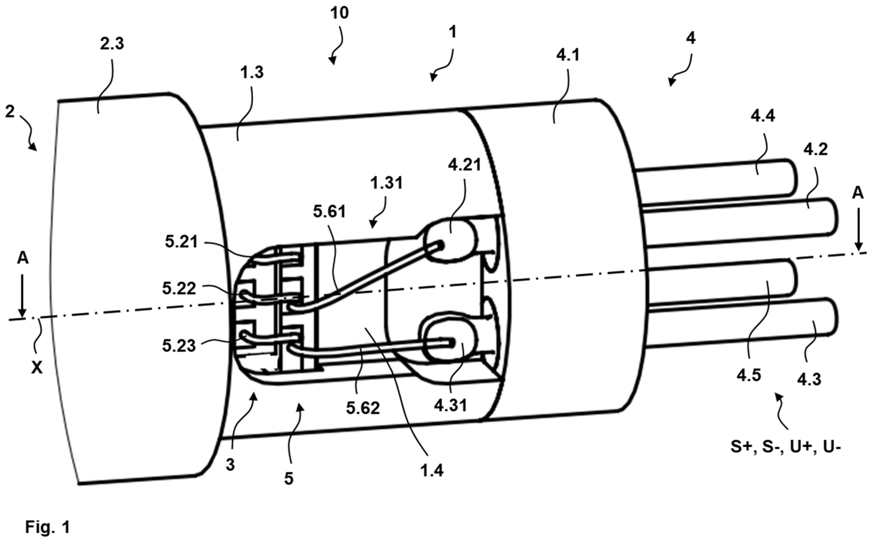

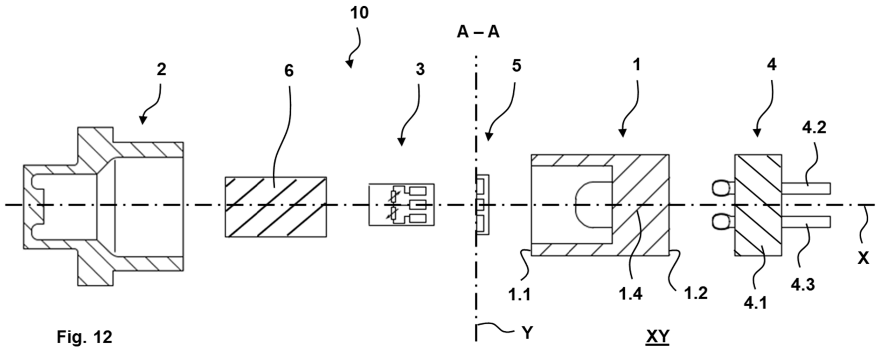

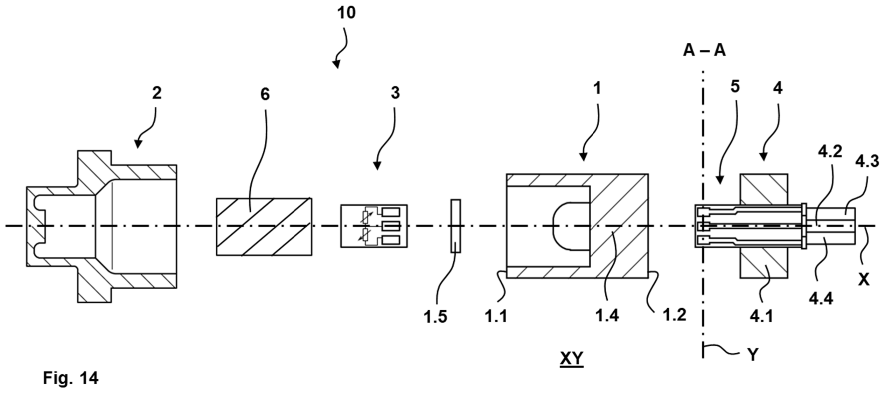

Die Fig. 1 bis 8 und 11 bis 15 zeigen Teile von zwei beispielhaften Ausführungsformen des erfindungsgemässen Sensors 10 zur Messung eines Drucks P. Der Sensor 10 ist in einem dreidimensionalen Koordinatensystem dargestellt. Das Koordinatensystem umfasst drei Achsen. Die drei Achsen X, Y, Z stehen senkrecht aufeinander. Jeweils zwei der Achsen X, Y, Z spannen eine Ebene XY, XZ, YZ auf. Die drei Achsen X, Y, Z werden auch als Längsachse X, Querachse Y und Vertikalachse Z bezeichnet. Die Längsachse X und die Querachse Y spannen eine Querebene XY auf. Die Längsachse X und die Vertikalachse Z spannen eine Vertikalebene XZ auf. Die Querachse Y und die Vertikalachse Z spannen eine Normalebene YZ auf. Nachfolgend wird eine Richtung parallel zur Längsachse X auch als Längsrichtung bezeichnet, während eine Richtung senkrecht dazu, als Radialrichtung bezeichnet wird.

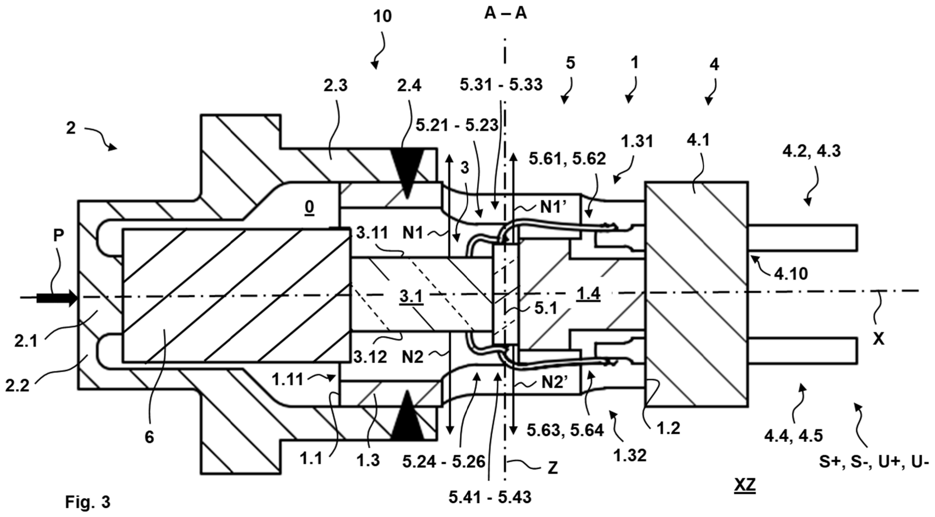

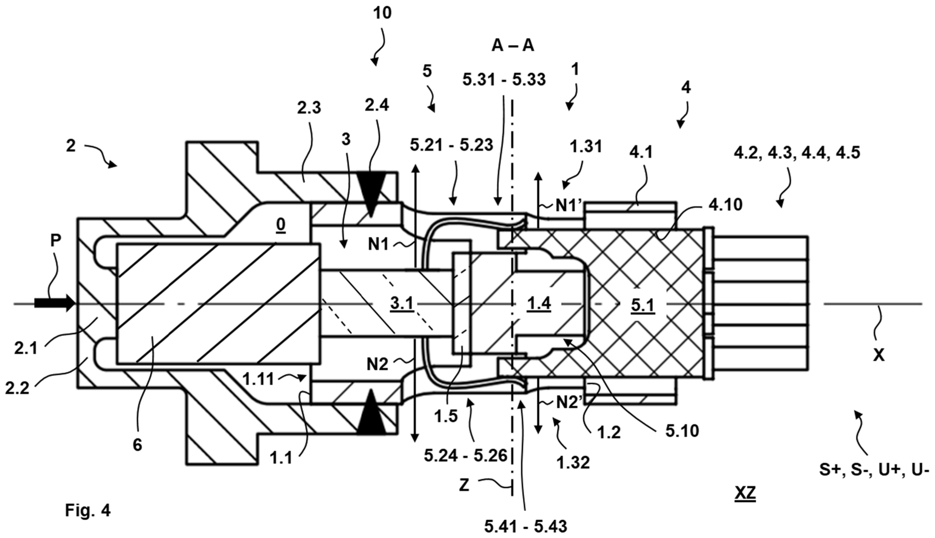

Der Druck P stammt von einem Medium. Das Medium kann gasförmig und/oder flüssig sein. Das Medium kann wasserstoffhaltig sein, mit einem Gehalt von grösser/gleich 1 Vol% Wasserstoff. Der Druck P ist kleiner/gleich 2500 bar. In Fig. 3 und 4 ist der Druck P schematisch als Pfeil dargestellt, welcher in Längsrichtung auf das Membranelement 2 wirkt. Ein Behälter, in dem das Medium angeordnet ist, ist figürlich nicht dargestellt.

### DAS INNERE GEHÄUSETEIL 1

Das innere Gehäuseteil 1 hat die Funktion, die Messeinheit 3 und die Ableiteinheit 5 aufzunehmen.

In den beiden Ausführungsformen des Sensors 10 gemäss Fig. 1 bis 4 ist das innere Gehäuseteil 1 hohlzylinderförmig. Das innere Gehäuseteil 1 ist aus einem widerstandsfähigen, metallischen Werkstoff wie ein hochlegierter Edelstahl, usw. Vorzugsweise ist das innere Gehäuseteil 1 einstückig gefertigt.

In den beiden Ausführungsformen des Sensors 10 gemäss Fig. 1 bis 4 weist das innere Gehäuseteil 1 in Längsrichtung ein erstes Gehäuseende 1.1 und ein zweites Gehäuseende 1.2 auf. In Radialrichtung weist das innere Gehäuseteil 1 eine Gehäusewandung 1.3 auf. In Längsrichtung begrenzt das innere Gehäuseteil 1 zwischen dem ersten Gehäuseende 1.1 und dem zweiten Gehäuseende 1.2 einen Hohlraum 0. In Radialrichtung begrenzt das innere Gehäuseteil 1 den Hohlraum 0 mit der Gehäusewandung 1.3. Die Messeinheit 3 und die Ableiteinheit 5 sind vollständig im Hohlraum 0 angeordnet. Die Durchführung 4 ist teilweise im Hohlraum 0 angeordnet.

Das innere Gehäuseteil 1 weist eine axiale Öffnung 1.11 auf. In den beiden Ausführungsformen des Sensors 10 gemäss Fig. 1 bis 4 ist die axiale Öffnung 1.11 am ersten Gehäuseende 1.1 angeordnet. Durch die axiale Öffnung 1.11 ist der Hohlraum 0 am ersten Gehäuseende 1.1 in Längsrichtung von ausserhalb des inneren Gehäuseteiles 1 zugänglich.

In den beiden Ausführungsformen des Sensors 10 gemäss Fig. 1 bis 4 weist das innere Gehäuseteil 1 eine erste radiale Öffnung 1.31 und eine zweite radiale Öffnung 1.32 auf. Die beiden radialen Öffnungen 1.31, 1.32 sind an der Gehäusewandung 1.3 des inneren Gehäuseteiles 1 angeordnet. Durch die beiden radialen Öffnungen 1.31, 1.32 ist der Hohlraum 0 in Radialrichtung von ausserhalb des inneren Gehäuseteiles 1 zugänglich. Vorzugsweise reichen die beiden radialen Öffnungen 1.31, 1.32 entlang Vertikalachse Z von ausserhalb des inneren Gehäuseteiles 1 zum Hohlraum 0.

Die beiden radialen Öffnungen 1.31, 1.32 sind derart an der Gehäusewandung 1.3 angeordnet, dass die Messeinheit 3, die Ableiteinheit 5 und die Durchführung 4 durch die beiden radialen Öffnungen 1.31, 1.32 in Radialrichtung von ausserhalb des inneren Gehäuseteiles 1 zugänglich sind. Dabei verfügt jede der beiden radialen Öffnungen 1.31, 1.32 über eine flächige Ausdehnung, welche gross genug ausgelegt ist, um im Hohlraum 0 an der Messeinheit 3, der Ableiteinheit 5 und der Durchführung 4 elektrische Kontaktierungen wie Ultraschall-Wedge-Bonding, Ball-Ball-Wedge-Bonding, usw. zu bewerkstelligen.

Das innere Gehäuseteil 1 weist einen Auflagekörper 1.4 auf. Der Auflagekörper 1.4 hat die Funktion, den Kraftfluss des zu messenden Drucks P aufzunehmen. In den beiden Ausführungsformen des Sensors 10 gemäss Fig. 1 bis 4 ist der Auflagekörper 1.4 am zweiten Gehäuseende 1.2 angeordnet. Vorzugsweise ist der Auflagekörper 1.4 auf der Längsachse X am zweiten Gehäuseende 1.2 angeordnet.

In der ersten Ausführungsform des Sensors 10 gemäss Fig. 1 und 3 liegt die Messeinheit 3 in Längsrichtung einseitig am Auflagekörper 1.4 an.

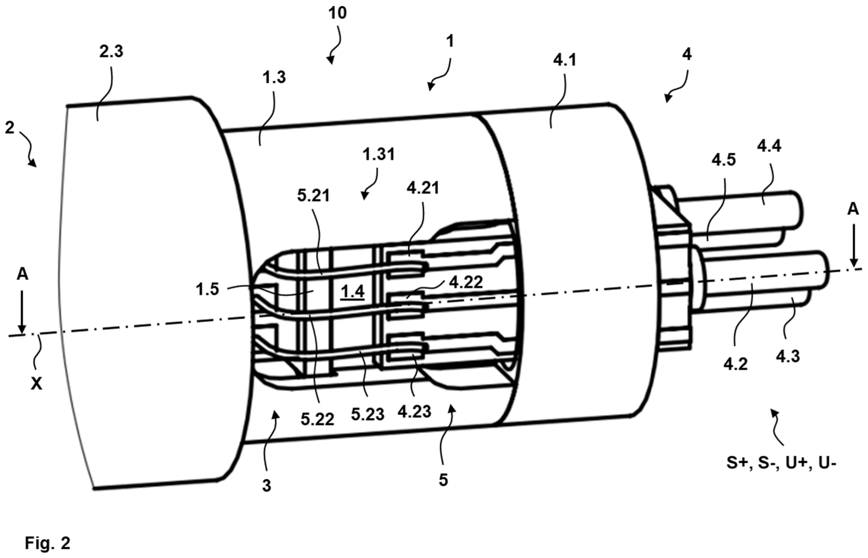

In der zweiten Ausführungsform des Sensors 10 gemäss Fig. 2 und 4 weist das innere Gehäuseteil 1 einen Isolatorkörper 1.5 auf. Der Isolatorkörper 1.5 hat die Funktion, die Messeinheit 3 in Längsrichtung gegenüber dem Auflagekörper 1.4 elektrisch zu isolieren. In der zweiten Ausführungsform des Sensors 10 gemäss Fig. 2 und 4 ist der Isolatorkörper 1.5 deshalb in Längsrichtung zwischen der Messeinheit 3 und dem Auflagekörper 1.4 angeordnet. Die Messeinheit 3 liegt somit in Längsrichtung einseitig am Isolatorkörper 1.5 an. Der Isolatorkörper 1.5 besteht aus elektrisch isolierendem Material wie Aluminiumoxid, Keramik, Saphir, usw.

### DAS MEMBRANELEMENT 2

Das Membranelement 2 hat die Funktion, den zu messenden Druck P in den Hohlraum 0 zu leiten.

In den beiden Ausführungsformen des Sensors 10 gemäss Fig. 1 bis 4 ist auch das Membranelement 2 hohlzylinderförmig. Das Membranelement 2 ist aus einem widerstandsfähigen, metallischen Werkstoff wie ein hochlegierter Edelstahl, usw. Vorzugsweise ist das Membranelement 2 einstückig gefertigt.

Das Membranelement 2 ist am ersten Gehäuseende 1.1 angeordnet. In den beiden Ausführungsformen des Sensors 10 gemäss Fig. 1 bis 4 schliesst das Membranelement 2 die axiale Öffnung 1.11 zum Hohlraum 0 in Längsrichtung ab. Der Hohlraum 0 reicht in Längsrichtung vom inneren Gehäuseteil 1 zum Membranelement 2. Der Hohlraum 0 befindet sich somit nicht nur im inneren Gehäuseteil 1, sondern auch im Membranelement 2. In Radialrichtung weist das Membranelement 2 eine Membranwandung 2.3 auf. In Radialrichtung begrenzt das Membranelement 2 den Hohlraum 0 mit der Membranwandung 2.3.

Auf der Längsachse X weist das Membranelement 2 eine Materialverdickung auf, welche nachfolgend als Stempel 2.1 bezeichnet wird. In einem Bereich in Radialrichtung ausserhalb der Längsachse X weist das Membranelement 2 eine Materialverdünnung auf, welche nachfolgend als Gelenk 2.2 bezeichnet wird. Gemäss Fig. 3 und 4 ist das Gelenk 2.2 in Radialrichtung im konstanten Abstand ringförmig um den Stempel 2.1 ausgebildet. Unter der Wirkung des Drucks P ermöglicht das Gelenk 2.2 eine Auslenkung des Stempels 2.1 in Längsrichtung. Der Stempel 2.1 leitet den zu messenden Druck P auf der Längsachse X in den Hohlraum 0.

In einem weiteren Bereich in Radialrichtung ausserhalb des Gelenkes 2.2 befindet sich die Membranwandung 2.3. Auf einer vom Hohlraum 0 abgewandten Seite der Membranwandung 2.3 ist ein Verbindungsmittel angeordnet. Mit dem Verbindungsmittel ist der Sensor 10 an einem Behälter, in dem das Medium angeordnet ist, befestigbar. Das Verbindungsmittel ist figürlich nicht dargestellt. Das Verbindungsmittel kann als Überwurfmutter, Montagehülse, Aussengewinde, usw. für eine Schraubverbindung mit dem Behälter ausgebildet sein.

Vorzugsweise ist in Radialrichtung ein Aussendurchmesser der Membranwandung 2.3 grösser als ein Aussendurchmesser der Gehäusewandung 1.3, so dass die Membranwandung 2.3 in Längsrichtung über die Gehäusewandung 1.3 schiebbar ist.

Die Membranwandung 2.3 ist über eine erste stoffschlüssige Verbindung 2.4 an der Gehäusewandung 1.3 befestigt. Vorzugsweise ist die erste stoffschlüssige Verbindung 2.4 gemäss Fig. 3 und 4 als mindestens eine die Längsachse X umlaufende Schweissnaht ausgebildet.

Anstelle der direkten Befestigung der Membranwand 2.3 mit der Gehäusewandung 1.3 gemäss Fig. 3 und 4 kann der Fachmann auch eine indirekte Befestigung Membranwand 2.3 über hohlzylinderförmiges Zwischenstück mit der Gehäusewandung 1.3 realisieren. Das Zwischenstück ist aus dem gleichen widerstandsfähigen, metallischen Werkstoff wie das Membranelement 2 und das innere Gehäuseteil 1. Der Fachmann realisiert dann zwei erste stoffschlüssige Verbindungen, eine erste stoffschlüssige Verbindung zwischen der Membranwand 2.3 und dem Zwischenstück und eine zweite stoffschlüssige Verbindung zwischen dem Zwischenstück und der Gehäusewandung 1.3.

### DIE MESSEINHEIT 3

Die Messeinheit 3 hat die Funktion, für den zu messenden Druck P mindestens ein Messsignal S+, S- zu erzeugen.

Gemäss Fig. 3 und 4 weist die Messeinheit 3 einen Tragkörper 3.1 auf. Der Tragkörper 3.1 besteht aus elektrisch isolierendem Material wie Silizium, Siliziumoxid, Borosilikatglas, Siliziumkarbid, usw.

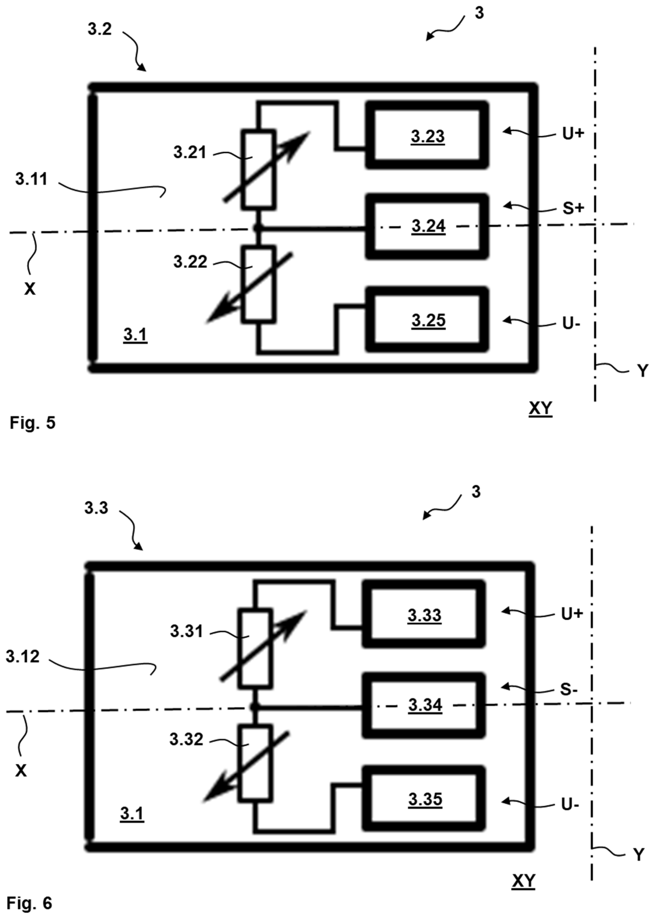

Vorzugsweise ist der Tragkörper 3.1 quaderförmig und weist mehrere Oberflächen auf. Zwei der Oberflächen werden nachfolgend als erste Tragfläche 3.11 und als zweite Tragfläche 3.12 bezeichnet. Details des Tragkörpers 3 sind den Fig. 5 und 6 zu entnehmen. Gemäss Fig. 5 und 6 erstrecken sich die beiden Tragflächen 3.11, 3.12 in Längsrichtung und parallel zur Querebene XY.

Die erste Tragfläche 3.11 weist eine erste Tragflächennormale N1 auf, die zweite Tragfläche 3.12 weist eine zweite Tragflächennormale N2 auf. Gemäss Fig. 3 und 4 tritt die erste Tragflächennormale N1 in Radialrichtung in einem spitzen Winkel durch die radiale Öffnung 1.31 und die zweite Tragflächennormale N2 tritt in Radialrichtung in einem spitzen Winkel durch die zweite radiale Öffnung 1.32. Vorzugsweise sind die Tragflächennormalen N1, N2 parallel zur Vertikalachse Z. Die Tragflächennormalen N1, N2 treten so in einem Winkel von 0 ° durch die beiden radialen Öffnungen 1.31, 1.32. Die Tragflächennormalen N1, N2 stehen in einem Winkel grösser Null zueinander. Vorzugsweise stehen die Tragflächennormalen N1, N2 in einem Winkel von 180 ° zueinander.

Die Messeinheit 3 ist auf der Längsachse X im Kraftfluss des zu messenden Drucks P angeordnet. Die Messeinheit 3 arbeitet nach dem piezoresistivem Messprinzip. Vorzugsweise ist der Tragkörper 3.1 ein SOI. Unterhalb von jeder Tragfläche 3.11, 3.12 ist eine Oxidschicht angeordnet.

Die Tragflächen 3.11, 3.12 weisen elektrische Widerstandselemente 3.21, 3.22, 3.31, 3.32 aus piezoresistivem Material wie Bor-dotiertes Silizium, usw. auf. Die elektrischen Widerstandselemente 3.21, 3.22, 3.31, 3.32 sind durch die Oxidschichten gegenseitig elektrisch isoliert. Die elektrischen Widerstandselemente 3.21, 3.22, 3.31, 3.32 sind in Höhe, Länge und Breite strukturiert.

Die Tragflächen 3.11, 3.12 weisen elektrische Leitelemente aus elektrisch leitfähigem Material wie hochdotiertes Silizium, Aluminium, Titan, Wolfram, usw. auf. Auch die elektrischen Leitelemente sind durch die Oxidschichten gegenseitig elektrisch isoliert. Die elektrischen Leitelemente sind in Höhe, Länge und Breite strukturiert. Die elektrischen Leitelemente sind ohne Bezugszeichen.

Die elektrischen Widerstandselemente 3.21, 3.22, 3.31, 3.32 sind durch die elektrischen Leitelemente zu einer Wheatstone'schen Brückenschaltung verbunden.

Das Aufbringen und Strukturieren der elektrischen Widerstandselemente 3.21, 3.22, 3.31, 3.32 und der elektrischen Leitelemente auf den Tragflächen 3.11, 3.12 erfolgt mittels chemischer Gasphasenabscheidung, physikalischer Gasphasenabscheidung, Epitaxie, Lithographie, Ätzen, usw.

Die Messeinheit 3 weist eine erste Messschaltung 3.2 und eine zweite Messschaltung 3.3 auf. Die erste Messschaltung 3.2 wird von der ersten Tragfläche 3.11 getragen, die zweite Messschaltung 3.3 wird von der zweiten Tragfläche 3.12 getragen.

Die erste Messschaltung 3.2 weist erste elektrische Widerstandselemente 3.21, 3.22 auf. Die zweite Messschaltung 3.3 weist zweite elektrische Widerstandselemente 3.31, 3.32 auf. Vorzugsweise weist jede der beiden Messschaltungen 3.2, 3.3 zwei elektrische Widerstandselemente 3.21, 3.22, 3.31, 3.32 auf. Gemäss Fig. 5 weist die erste Messchaltung 3.2 ein erstes erstes elektrisches Widerstandselement 3.21 und ein zweites erstes elektrisches Widerstandselement 3.22 auf, welche eine Halbbrücke bilden. Gemäss Fig. 6 weist die zweite Messchaltung 3.3 ein erstes zweites elektrisches Widerstandselement 3.31 und ein zweites zweites elektrisches Widerstandselement 3.32 auf, welche ebenfalls eine Halbbrücke bilden.

Die beiden Messschaltungen 3.2, 3.3 setzen sich zu einer Wheatstone'schen Brückenschaltung zusammen. Durch die Auslenkung in Längsrichtung des Stempels 2.1 wird der Druck P als Kraftfluss auf die Wheatstone'sche Brückenschaltung eingeleitet. Bei Anlegen einer Betriebsspannung U+, U- an die Wheatstone'schen Brückenschaltung bewirkt der eingeleitete Druck P in der Wheatstone'schen Brückenschaltung eine elektrische Widerstandsänderung. Die elektrische Widerstandsänderung ist proportional zum zu messenden Druck P und ist als Messsignal S+, S- abgreifbar.

Die ersten elektrischen Widerstandselemente 3.21, 3.22 und die zweiten elektrischen Widerstandselemente 3.31, 3.32 der beiden Messschaltungen 3.2, 3.3 sind in Reihe geschaltet. Jede der Reihenschaltungen der beiden Messschaltungen 3.2, 3.3 weist ein erstes Ende und ein zweites Ende auf. Vorzugsweise weist jede der beiden Messschaltungen 3.2, 3.3 einen ersten, zweiten und dritten Kontaktpunkt auf. Der erste Kontaktpunkt befindet sich am ersten Ende der Reihenschaltungen, der zweite Kontaktpunkt befindet sich am zweiten Ende der Reihenschaltungen und der dritte Kontaktpunkt befindet sich zwischen den zwei elektrischen Widerstandselementen 3.21, 3.22, 3.31, 3.32 der Reihenschaltungen. Die Kontaktpunkte sind ohne Bezugszeichen.

Die erste Messschaltung 3.2 weist erste Kontaktstellen 3.23 - 3.25 auf und die zweite Messchaltung 3.3 weist zweite Kontaktstellen 3.33 - 3.35 auf. Die Kontaktstellen 3.23 - 3.25, 3.33 - 3.35 haben die Funktion, elektrische Kontaktierungen der Messeinheit 3 mit der Durchführung 4 bereitzustellen.

Die ersten und zweiten Kontaktstellen 3.23 - 3.25, 3.33 - 3.35 sind aus elektrisch leitfähigem Material wie Kupfer, Silber, Gold, usw. Das Aufbringen und Strukturieren der ersten und zweiten Kontaktstellen 3.23 - 3.25, 3.33 - 3.35 auf den Tragflächen 3.11, 3.12 erfolgt mittels chemischer Gasphasenabscheidung, physikalischer Gasphasenabscheidung, Epitaxie, Siebdruck, Galvanik, Lithographie, Ätzen, usw.

Jede erste und zweite Kontaktstelle 3.23 - 3.25, 3.33 - 3.35 verfügt parallel zur Querebene XY über eine flächige Ausdehnung, welche gross genug ausgelegt ist, um elektrische Kontaktierungen wie Ultraschall-Wedge-Bonding, Ball-Ball-Wedge-Bonding, usw. usw. zu bewerkstelligen.

Die ersten elektrischen Widerstandselemente 3.21, 3.22 sind über elektrische Leitelemente mit den ersten Kontaktstellen 3.23 - 3.25 elektrisch verbunden. Die zweiten elektrischen Widerstandselemente 3.31, 3.32 sind über elektrische Leitelemente mit den zweiten Kontaktstellen 3.33 -
3.35 elektrisch verbunden.

Vorzugsweise weist die erste Messschaltung 3.2 drei erste Kontaktstellen 3.23 - 3.25 auf und die zweite Messschaltung 3.3 weist drei zweite Kontaktstellen 3.33 - 3.35 auf. Die ersten Kontaktstellen 3.23 - 3.25 umfassen eine erste erste Kontaktstelle 3.23, eine zweite erste Kontaktstelle 3.24 und eine dritte erste Kontaktstelle 3.25. Die zweiten Kontaktstellen 3.33 - 3.35 umfassen eine erste zweite Kontaktstelle 3.33, eine zweite zweite Kontaktstelle 3.34 und eine dritte zweite Kontaktstelle 3.35.

Vorzugsweise weist die erste Messschaltung 3.2 gemäss Fig. 5 drei elektrische Leitelemente auf, jedes der drei elektrischen Leitelemente verbindet einen anderen der drei Kontaktpunkt der ersten Messschaltung 3.2 elektrisch mit genau einer der drei ersten Kontaktstellen 3.23 - 3.25. Auch die zweite Messschaltung 3.3 weist gemäss Fig. 6 drei elektrische Leitelemente auf, jedes der drei elektrischen Leiterelemente verbindet einen anderen der drei Kontaktpunkte der zweiten Messschaltung 3.3 elektrisch mit genau einer der drei zweiten Kontaktstellen 3.33 - 3.35.

Bei Anlegen der Betriebsspannung U+, U- an mindestens zwei Kontaktstellen 3.23, 3.25 der ersten Kontaktstellen 3.23 - 3.25 und an mindestens zwei Kontaktstellen 3.33, 3.35 der zweiten Kontaktstellen 3.33 - 3.35 bewirkt der auf die Wheatstone'schen Brückenschaltung eingeleitete Druck P eine Widerstandsänderung, welche Widerstandsänderung an mindestens eine Kontaktstelle 3.24 der ersten Kontaktstellen 3.23 - 3.25 und an mindestens einer Kontaktstelle 3.34 der zweiten Kontaktstellen 3.33 - 3.35 als Messsignal S+, S- abgreifbar ist.

Die Betriebsspannung U+, U- umfasst eine positive Betriebsspannung U+ und eine negative Betriebsspannung U-. Das Messsignal S+, S- umfasst ein positives Messsignal S+ und ein negatives Messsignal S-.

Gemäss Fig. 5 wird die positive Betriebsspannung U+ über die erste erste Kontaktstelle 3.23 an die erste Messschaltung 3.2 angelegt und an der zweiten ersten Kontaktstelle 3.24 ist das positive Messsignal S+ abgreifbar und an der dritten ersten Kontaktstelle 3.25 ist die negative Betriebsspannung U- angelegt. Gemäss Fig. 6 wird die positive Betriebsspannung U+ über die erste zweite Kontaktstelle 3.33 an die zweite Messschaltung 3.3 angelegt und an der zweiten zweiten Kontaktstelle 3.34 ist das negative Messsignal S- abgreifbar und an der dritten zweiten Kontaktstelle 3.35 ist die negative Betriebsspannung U- angelegt.

### DIE ABLEITEINHEIT 5

Die Ableiteinheit 5 hat die Funktion, das Messsignal S+, S- von der Messeinheit 3 zur Durchführung 4 abzuleiten und die Betriebsspannung U+, U- von der Durchführung 4 zur Messeinheit 3 zu leiten.

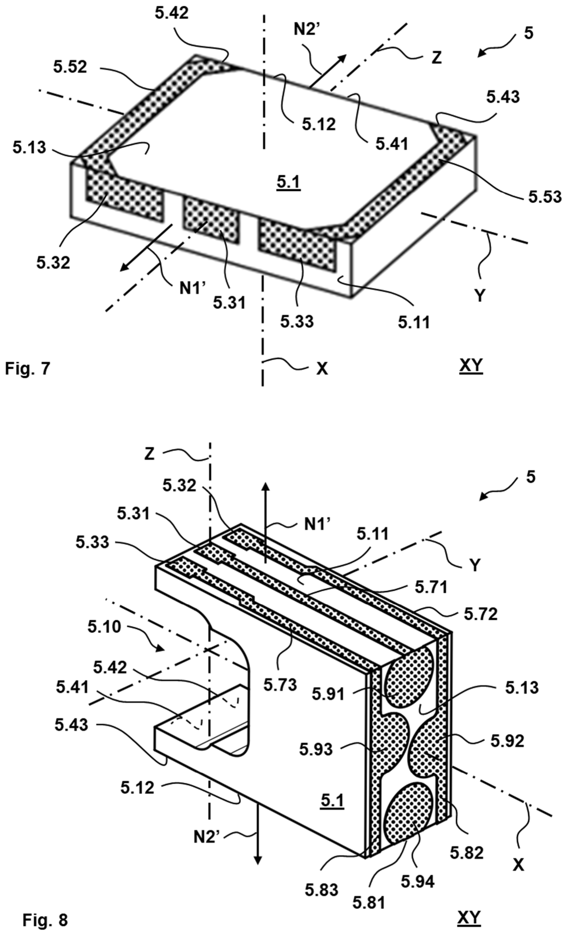

Details der Ableiteinheit 5 sind den Fig. 7 und 8 zu entnehmen. Fig. 7 zeit eine erste Ausführungsform der Ableiteinheit 5. Fig. 8 zeigt eine zweite Ausführungsform der Ableiteinheit 5. Die Ableiteinheit 5 weist einen Kontaktkörper 5.1 auf. Der Kontaktkörper 5.1 besteht aus elektrisch isolierendem Material wie Aluminiumoxid, Keramik, Saphir, usw.

Vorzugsweise ist der Kontaktkörper 5.1 quaderförmig und weist mehrere Oberflächen auf. Zwei der Oberflächen werden nachfolgend als erste Kontaktfläche 5.11 und als zweite Kontaktfläche 5.12 bezeichnet. Gemäss Fig. 7 und 8 erstrecken sich die beiden Kontaktflächen 5.11, 5.12 in Längsrichtung parallel zur Querebene XY. Eine dritte Oberfläche wird nachfolgend als weitere Oberfläche 5.13 bezeichnet. Die weitere Oberfläche 5.13 erstreckt sich in Radialrichtung senkrecht zur Querebene XY. Die weitere Oberfläche 5.13 grenzt an die erste Kontaktfläche 5.11 und an die zweite Kontaktfläche 5.12 an.

Die erste Kontaktfläche 5.11 weist eine erste Kontaktflächennormale N1' auf, die zweite Kontaktfläche 5.12 weist eine zweite Kontaktflächennormale N2' auf. Gemäss Fig. 3 und 4 tritt die erste Kontaktflächennormale N1' in Radialrichtung in einem spitzen Winkel durch die radiale Öffnung 1.31 und die zweite Kontaktflächennormale N2' tritt in Radialrichtung in einem spitzen Winkel durch die zweite radiale Öffnung 1.32. Vorzugsweise sind die Kontaktflächennormalen N1', N2' parallel zur Vertikalachse Z. Die Kontaktflächennormalen N1', N2' treten so in einem Winkel von 0 ° durch die beiden radialen Öffnungen 1.31, 1.32. Die Kontaktflächennormalen N1', N2' stehen in einem Winkel grösser Null zueinander. Vorzugsweise stehen die Kontaktflächennormalen N1'. N2' in einem Winkel von 180 ° zueinander.

Die Ableiteinheit 5 weist Kontaktstellen 5.31 -
5.33, 5.41 - 5.43, 5.91 - 5.94 und elektrische Leiterbahnen 5.52, 5.53, 5.71 - 5.73, 5.81 - 5.83 auf. Die Kontaktstellen 5.31 - 5.33, 5.41 - 5.43, 5.91 - 5.94 und die elektrischen Leiterbahnen 5.52, 5.53, 5.71 - 5.73, 5.81 - 5.83 haben die Funktion, elektrische Kontaktierungen der Messeinheit 3 mit der Durchführung 4 bereitzustellen.

Die Kontaktstellen 5.31 - 5.33, 5.41 - 5.43, 5.91 - 5.94 und die elektrischen Leiterbahnen 5.52, 5.53, 5.71 - 5.73, 5.81 - 5.83 sind aus elektrisch leitfähigem Material wie Kupfer, Silber, Gold, usw. Die Kontaktstellen 5.31 -
5.33, 5.41 - 5.43, 5.91 - 5.94 und die elektrischen Leiterbahnen 5.52, 5.53, 5.71 - 5.73, 5.81 - 5.83 sind auf dem Kontaktkörper 5.1 angeordnet. Das Aufbringen und Strukturieren der Kontaktstellen 5.31 - 5.33, 5.41 - 5.43, 5.91 - 5.94 und der elektrischen Leiterbahnen 5.52, 5.53, 5.71 - 5.73, 5.81 -
5.83 auf dem Kontaktkörper 5.1 erfolgt mittels chemischer Gasphasenabscheidung, physikalischer Gasphasenabscheidung, Epitaxie, Siebdruck, Galvanik, Lithographie, Ätzen, usw.

Die Kontaktstellen 5.31 - 5.33, 5.41 - 5.43, 5.91 -
5.94 umfassen dritte Kontaktstellen 5.31 - 5.33, vierte Kontaktstellen 5.41 - 5.43 und fünfte Kontaktstellen 5.91 -
5.94.

In den beiden Ausführungsformen der Ableiteinheit 5 gemäss Fig. 7 und 8 sind die dritten Kontaktstellen 5.31 -
5.33 auf der ersten Kontaktfläche 5.11 angeordnet und die vierten Kontaktstellen 5.41 - 5.43 sind auf der zweiten Kontaktfläche 5.12 angeordnet. Vorzugsweise weist die Ableiteinheit 5 drei dritte Kontaktstellen 5.31 - 5.33 und drei vierte Kontaktstellen 5.41 - 5.43 auf. Die dritten Kontaktstellen 5.31 - 5.33 umfassen eine erste dritte Kontaktstelle 5.31, eine zweite dritte Kontaktstelle 5.32 und eine dritte dritte Kontaktstelle 5.33 und die vierten Kontaktstellen 5.41 - 5.43 umfassen eine erste vierte Kontaktstelle 5.41, eine zweite vierte Kontaktstelle 5.42 und eine dritte vierte Kontaktstelle 5.43.

Jede dritte und vierte Kontaktstelle 5.31 - 5.33, 5.41 - 5.43 verfügt parallel zur Querebene XY über eine flächige Ausdehnung, welche gross genug ausgelegt ist, um elektrische Kontaktierungen wie Ultraschall-Wedge-Bonding, Ball-Ball-Wedge-Bonding, usw. zu bewerkstelligen.

Die zweite Ausführungsform der Ableiteinheit 5 gemäss Fig. 8 weist fünfte Kontaktstellen 5.91 - 5.94 auf. Die fünften Kontaktstellen 5.91 - 5.94 sind auf der weiteren Oberfläche 5.13 des Kontaktkörpers 5.1 angeordnet. Die fünften Kontaktstellen 5.91 - 5.94 umfassen eine erste fünfte Kontaktstelle 5.91, eine zweite fünfte Kontaktstelle 5.92, eine dritte fünfte Kontaktstelle 5.93 und einer vierte fünfte Kontaktstelle 5.94.

Die elektrischen Leiterbahnen 5.52, 5.53, 5.71 -
5.73, 5.81 - 5.83 umfassen erste elektrische Leiterbahnen 5.52, 5.53, zweite elektrische Leiterbahnen 5.71 - 5.73 und dritte elektrische Leiterbahnen 5.81 - 5.83.

Die erste Ausführungsform der Ableiteinheit 5 gemäss Fig. 7 weist erste elektrische Leiterbahnen 5.52, 5.53 auf. Die ersten elektrischen Leiterbahnen 5.52, 5.53 umfassen eine erste erste elektrische Leiterbahn 5.52 und eine zweite erste elektrische Leiterbahn 5.53. Die ersten elektrischen Leiterbahnen 5.52, 5.53 sind auf der weiteren Oberfläche 5.13 des Kontaktkörpers 5.1 angeordnet.

Die zweite dritte Kontaktstelle 5.32 auf der ersten Kontaktfläche 5.11 und die zweite vierte Kontaktstelle 5.42 auf der zweiten Kontaktfläche 5.12 sind über die erste erste elektrische Leiterbahn 5.52 der weiteren Oberfläche 5.13 elektrisch miteinander verbunden.

Die dritte dritte Kontaktstelle 5.33 auf der ersten Kontaktfläche 5.11 und die dritte vierte Kontaktstelle 5.43 auf der zweiten Kontaktfläche 5.12 sind über die zweite erste elektrische Leiterbahn 5.52 auf einer weiteren Oberfläche 5.13 elektrisch miteinander verbunden.

Die zweite Ausführungsform der Ableiteinheit 5 gemäss Fig. 8 weist zweite elektrische Leiterbahnen 5.71 - 5.73 und dritte elektrische Leiterbahnen 5.81 - 5.83 auf.

Die zweiten elektrischen Leiterbahnen 5.71 - 5.73 umfassen eine erste zweite elektrische Leiterbahn 5.71, eine zweite zweite elektrische Leiterbahn 5.72 und eine dritte zweite elektrische Leiterbahn 5.73. Die dritten elektrischen Leiterbahnen 5.81 - 5.83 umfassen eine erste dritte elektrische Leiterbahn 5.81, eine zweite dritte elektrische Leiterbahn 5.82 und eine dritte dritte elektrische Leiterbahn 5.83. Die zweiten elektrischen Leiterbahnen 5.71 - 5.73 sind auf der ersten Kontaktfläche 5.11 und auf der weiteren Oberfläche 5.13 des Kontaktkörpers 5.1 angeordnet. Die dritten elektrischen Leiterbahnen 5.81 - 5.83 sind auf der zweiten Kontaktfläche 5.12 und auf der weiteren Oberfläche 5.13 des Kontaktkörpers 5.1 angeordnet.

Die erste dritte Kontaktstelle 5.31 auf der ersten Kontaktfläche 5.11 ist über die erste zweite elektrische Leiterbahn 5.71 der ersten Kontaktfläche 5.11 elektrisch mit der ersten fünften Kontaktstelle 5.91 auf der weiteren Oberfläche 5.13 verbunden.

Die erste vierte Kontaktstelle 5.41 auf der zweiten Kontaktfläche 5.12 ist über die erste dritte elektrische Leiterbahn 5.81 der zweiten Kontaktfläche 5.12 elektrisch mit der vierten fünften Kontaktstelle 5.94 auf der weiteren Oberfläche 5.13 verbunden.

Die zweite dritte Kontaktstelle 5.32 auf der ersten Kontaktfläche 5.11 ist über die zweite zweite elektrische Leiterbahn 5.72 der ersten Kontaktfläche 5.11 und der weiteren Oberfläche 5.13 elektrisch mit der zweiten fünften Kontaktstelle 5.92 auf der weiteren Oberfläche 5.13 verbunden. Die zweite vierte Kontaktstelle 5.42 auf der zweiten Kontaktfläche 5.12 ist über die zweite dritte elektrische Leiterbahn 5.82 der zweiten Kontaktfläche 5.12 und der weiteren Oberfläche 5.13 elektrisch mit der zweiten fünften Kontaktstelle 5.92 auf der weiteren Oberfläche 5.13 verbunden.

Die dritte dritte Kontaktstelle 5.33 auf der ersten Kontaktfläche 5.11 ist über die dritte zweite elektrische Leiterbahn 5.73 der ersten Kontaktfläche 5.11 und der weiteren Oberfläche 5.13 elektrisch mit der dritten fünften Kontaktstelle 5.93 auf der weiteren Oberfläche 5.13 verbunden. Die dritte vierte Kontaktstelle 5.43 auf der zweiten Kontaktfläche 5.12 ist über die dritte dritte elektrische Leiterbahn 5.83 der zweiten Kontaktfläche 5.12 und der weiteren Oberfläche 5.13 elektrisch mit der dritten fünfte Kontaktstelle 5.93 auf der weiteren Oberfläche 5.13 verbunden.

Die Ableiteinheit 5 weist Leitungselemente 5.21 -
5.26, 5.61 - 5.64 auf. Die Leitungselemente 5.21 - 5.26, 5.61 - 5.64 haben die Funktion, elektrische Kontaktierungen bei der elektrischen Verschaltung des Sensors 10 zu bewerkstelligen.

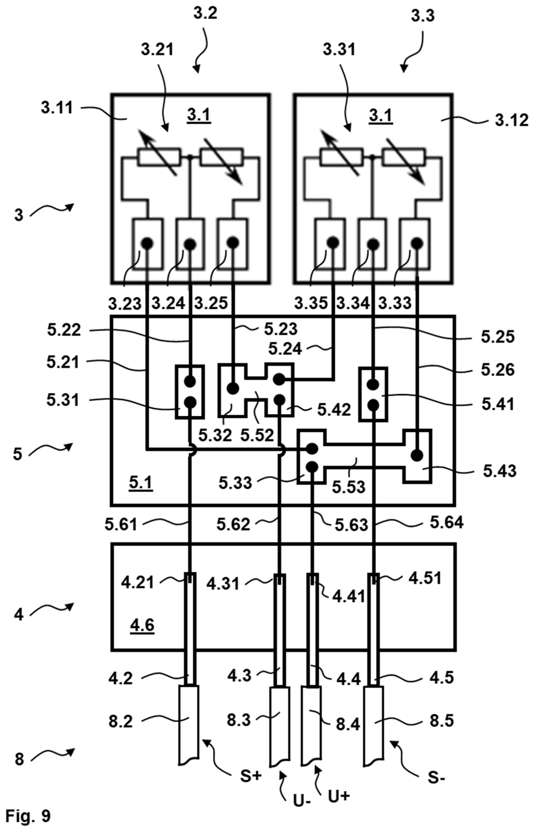

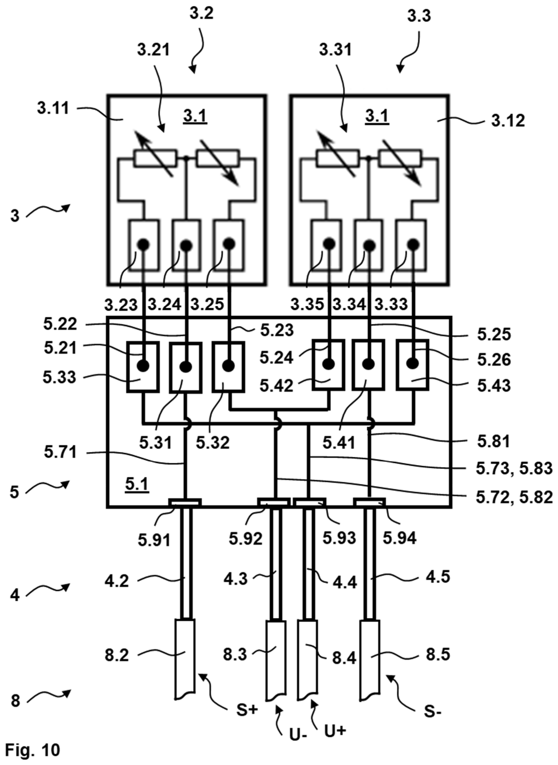

Details der elektrischen Verschaltung des Sensors 10 sind den Fig. 9 und 10 zu entnehmen. Fig. 9 zeigt die elektrische Verschaltung der ersten Ausführungsform des Sensors 10 gemäss Fig. 1 mit der ersten Ausführungsform der Ableiteinheit 5 gemäss Fig. 7. Fig. 10 zeigt die elektrische Verschaltung der zweiten Ausführungsform des Sensors 10 gemäss Fig. 2 mit der zweiten Ausführungsform der Ableiteinheit 5 gemäss Fig. 8.

Die Leitungselemente 5.21 - 5.26, 5.61 - 5.64 sind aus elektrisch leitfähigem Material wie Kupfer, Silber, Gold, usw.

In den beiden Ausführungsformen der elektrischen Verschaltung des Sensors 10 gemäss Fig. 9 und 10 weisen die beiden Ausführungsformen der Ableiteinheit 5 sechs erste Leitungselemente 5.21 - 5.26 auf. Die ersten Leitungselemente 5.21 - 5.26 umfassen ein erstes erstes Leitungselement 5.21, ein zweites erstes Leitungselement 5.22, ein drittes erstes Leitungselement 5.23, ein viertes erstes Leitungselement 5.24, ein fünftes erstes Leitungselement 5.25 und ein sechstes erstes Leitungselement 5.26.

Das erste erste Leitungselement 5.21 kontaktiert elektrisch die erste erste Kontaktstelle 3.23 mit der dritten dritten Kontaktstelle 5.33. Das zweite erste Leitungselement 5.22 kontaktiert elektrisch die zweite erste Kontaktstelle 3.24 mit der ersten dritten Kontaktstelle 5.31. Das dritte erste Leitungselement 5.23 kontaktiert elektrisch die dritte erste Kontaktstelle 3.25 mit der zweiten dritten Kontaktstelle 5.32. Das vierte erste Leitungselement 5.24 kontaktiert elektrisch die dritte dritte Kontaktstelle 3.35 mit der zweiten vierten Kontaktstelle 5.42. Das fünfte erste Leitungselement 5.25 kontaktiert elektrisch die zweite dritte Kontaktstelle 3.34 mit der ersten vierten Kontaktstelle 5.41. Das sechste erste Leitungselement 5.26 kontaktiert elektrisch die erste dritte Kontaktstelle 3.33 mit der dritten vierten Kontaktstelle 5.43.

Die elektrischen Kontaktierungen der ersten Leitungselemente 5.21 - 5.26 auf den ersten Kontaktstellen 3.23 - 3.25, den zweiten Kontaktstellen 3.33 - 3.35, den dritten Kontaktstellen 5.31 - 5.33 und den vierten Kontaktstellen 5.41 - 5.43 werden mittels Ultraschall-Wedge-Bonding, Ball-Ball-Wedge-Bonding, usw. bewerkstelligt.

In der ersten Ausführungsform der elektrischen Verschaltung des Sensors 10 gemäss Fig. 9 weist die erste Ausführungsform der Ableiteinheit 5 vier zweite Leitungselemente 5.61 - 5.64 auf. Die zweiten Leitungselemente 5.61 - 5.64 umfassen ein erstes zweites Leitungselement 5.61, ein zweites zweites Leitungselement 5.62, ein drittes zweites Leitungselement 5.63 und ein viertes zweites Leitungselement 5.64.

Die zweite Ausführungsform der Ableiteinheit 5 gemäss Fig. 8 weist eine Vertiefung 5.10 innerhalb des Kontaktkörpers 5.1 auf. Die Vertiefung 5.10 ist im Kontaktkörper 5.1 senkrecht zur Längsrichtung zwischen der dritten Kontaktstellen 5.31 - 5.33 der ersten Kontaktfläche 5.11 und der vierten Kontaktstellen 5.41 - 5.43 der zweiten Kontaktfläche 5.12 angeordnet. Der Kraftfluss des zu messenden Drucks P wirkt vom Membranelement 2 zur Messeinheit 3 und von der Messeinheit 3 weiter zum Auflagekörper 1.4 des inneren Gehäuseteils 1. Im Schnitt in der Vertikalebene XZ gemäss Fig. 4 ist der Auflagekörper 1.4 auf der Längsachse X in der Vertiefung 5.10 angeordnet, während die dritten und vierten Kontaktstellen 5.31 - 5.33, 5.41 - 5.43 auf der Vertikalachse Z ausserhalb der Vertiefung 5.10 angeordnet sind. Somit wirkt der Kraftfluss des zu messenden Drucks P in Längsrichtung in der Vertiefung 5.10 und gelangt nicht zum Kontaktkörper 5.1. Der Kraftfluss des zu messenden Drucks P wird vom Auflagekörper 1.4 in das zweite Gehäuseende 1.2 geleitet. Dadurch, dass die Ableiteinheit 5 ausserhalb des Kraftflusses angeordnet ist, wird verhindert, dass Druckspitzen des zu messenden Drucks P, welche Druckspitzen deutlich grösser als der Druck P sind, einen unerwünschten Bruch der Ableiteinheit 5 verursachen.

### DIE DURCHFÜHRUNG 4

Die Durchführung 4 hat die Funktion, das Messsignal S+, S- aus dem Hohlraum 0 nach ausserhalb des inneren Gehäuseteiles 1 zu leiten und die Betriebsspannung U+, U- von ausserhalb des inneren Gehäuseteiles 1 zur Messeinheit 3 zu leiten.

Die Durchführung 4 ist zylinderförmig. Die Durchführung 4 ist am vom Membranelement 2 abgewandten zweiten Gehäuseende 1.2 angeordnet. In den beiden Ausführungsformen des Sensors 10 gemäss Fig. 1 bis 4 schliesst die Durchführung 4 den Hohlraum 0 am zweiten Gehäuseende 1.2 in Längsrichtung ab. In den beiden Ausführungsformen des Sensors 10 gemäss Fig. 1 und 2 ist in Radialrichtung ein Aussendurchmesser der Durchführung 4 vorzugsweise weitgehend gleichgross wie der Aussendurchmesser der Gehäusewandung 1.3.

In den beiden Ausführungsformen des Sensors 10 gemäss Fig. 1 bis 4 weist die Durchführung 4 einen Durchführungskörper 4.1 auf. Der Durchführungskörper 4.1 ist aus einem widerstandsfähigen, metallischen Werkstoff wie ein hochlegierter Edelstahl, usw.

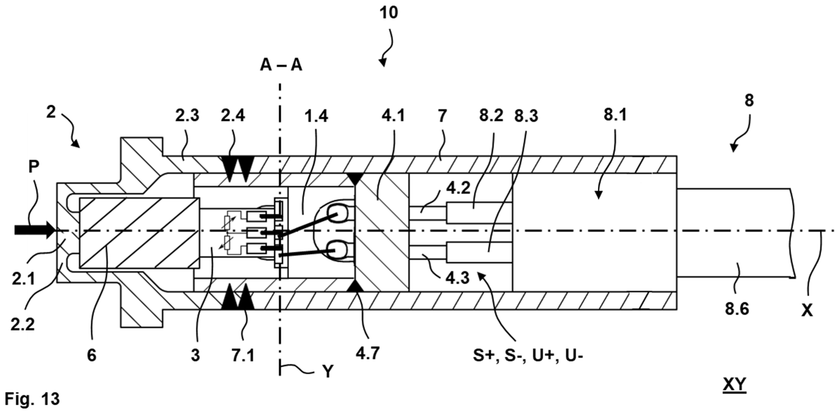

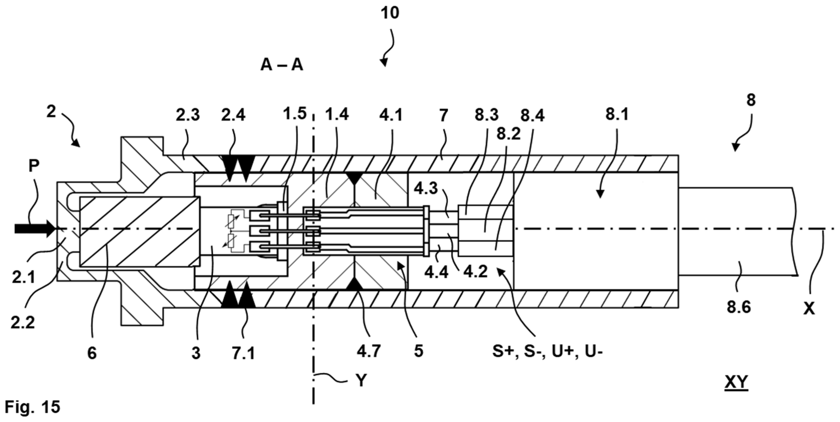

Vorzugsweise ist die Durchführung 4 über eine zweite stoffschlüssige Verbindung 4.7 am zweiten Gehäuseende 1.2 an der Gehäusewandung 1.3 befestigt. Vorzugsweise ist die zweite stoffschlüssige Verbindung 4.7 gemäss Fig. 13 und 15 als mindestens eine die Längsachse X umlaufende Schweissnaht ausgebildet.

In den beiden Ausführungsformen des Sensors 10 gemäss Fig. 1 bis 4 weist der Durchführungskörper 4.1 mindestens eine axiale Durchgangsöffnung 4.10 auf. Die axiale Durchgangsöffnung 4.10 verläuft parallel zur Längsachse X und reicht vom Hohlraum 0 nach ausserhalb des inneren Gehäuseteiles 1. In der ersten Ausführungsform des Sensors 10 gemäss Fig. 1 und 3 weist der Durchführungskörper 4.1 vier Durchgangsöffnungen 4.10 auf. In der zweiten Ausführungsform des Sensors 10 gemäss Fig. 2 und 4 weist der Durchführungskörper 4.1 eine axiale Durchgangsöffnung 4.10 auf.

In den beiden Ausführungsformen des Sensors 10 gemäss Fig. 1 bis 4 weist die Durchführung 4 Stiftelemente 4.2 - 4.5 aus elektrisch leitfähigem Material wie Kupfer, Silber, Gold, usw. auf. Vorzugsweise sind die Stiftelemente 4.2 - 4.5 stabförmig. Jedes Stiftelement 4.2 - 4.5 weist ein erstes Ende und ein zweites Ende auf. Jedes Stiftelement 4.2 - 4.5 ragt mit dem ersten Ende in den Hohlraum 0 und mit dem zweiten Ende nach ausserhalb des inneren Gehäuseteiles 1. Vorzugsweise weist die Durchführung 4 vier Stiftelemente 4.2 - 4.5 auf. Die Stiftelemente 4.2 - 4.5 umfassen ein erstes Stiftelement 4.2, ein zweites Stiftelement 4.3, ein drittes Stiftelement 4.4 und ein viertes Stiftelement 4.5.

In der ersten Ausführungsform des Sensors 10 gemäss Fig. 1 und 3 ist das erste Ende der Stiftelemente 4.2 - 4.5 vorzugsweise zu sechsten Kontaktstellen 4.21 - 4.51 abgeflacht. Die Abflachung erleichtert die elektrische Kontaktierung mit den zweiten Leiterelementen 5.61 - 5.64. Vorzugsweise weist das erste Stiftelement 4.2 eine erste sechste Kontaktstelle 4.21 auf, das zweite Stiftelement 4.3 weist eine zweite sechste Kontaktstelle 4.31 auf, das dritte Stiftelement 4.4 weist eine dritte sechste Kontaktstelle 4.41 auf und das vierte Stiftelement 4.5 weist eine vierte sechste Kontaktstelle 4.51 auf.

In der ersten Ausführungsform des Sensors 10 gemäss Fig. 1 und 3 weist die Durchführung 4 ein Isolierelement 4.6 auf. Das Isolierelement 4.6 ist in der elektrischen Verschaltung des Sensors 10 gemäss Fig. 9 dargestellt. Das Isolierelement 4.6 besteht aus elektrisch isolierendem Material wie Aluminiumoxid, Keramik, Saphir, Glaslot, usw. Die Stiftelemente 4.2 - 4.5 sind im Isolierelement 4.6 eingebettet. Über das Isolierelement 4.6 sind die Stiftelemente 4.2 - 4.5 in der axialen Durchgangsöffnung 4.10 befestigt. Vorzugsweise ist das Isolierelement 4.6 über eine stoffschlüssige Verbindung wie eine Lötverbindung, usw. in der axialen Durchgangsöffnung 4.10 befestigt. Die stoffschlüssige Verbindung ist figürlich nicht dargestellt. Die im Isolierelement 4.6 eingebetteten Stiftelemente 4.2 - 4.5 sind somit im Durchführungskörper 4.1 befestigt und vom Durchführungskörper 4.1 elektrisch isoliert.

In der ersten Ausführungsform der elektrischen Verschaltung des Sensors 10 gemäss Fig. 9 kontaktiert das erste zweite Leitungselement 5.61 elektrisch die erste dritte Kontaktstelle 5.31 mit der ersten sechsten Kontaktstelle 4.21 des ersten Stiftelementes 4.2. Das zweite zweite Leitungselement 5.62 kontaktiert die zweite dritte Kontaktstelle 5.32 elektrisch mit der zweiten sechsten Kontaktstelle 4.31 des zweiten Stiftelementes 4.3. Das dritte zweite Leitungselement 5.63 kontaktiert die dritte dritte Kontaktstelle 5.33 elektrisch mit der dritten sechsten Kontaktstelle 4.41 des dritten Stiftelementes 4.4. Das vierte zweite Leitungselement 5.64 kontaktiert die vierte dritte Kontaktstelle 5.34 elektrisch mit der vierten sechsten Kontaktstelle 4.51 des vierten Stiftelementes 4.5.

In der ersten Ausführungsform der elektrischen Verschaltung des Sensors 10 gemäss Fig. 9 wird die Betriebsspannung U+, U- von mindestens zwei Stiftelementen 4.3, 4.4 der Stiftelemente 4.2 - 4.5 über zweite Leitungselemente 5.61 -
5.64, dritte Kontaktstellen 5.31 - 5.33, vierte Kontaktstellen 5.41 - 5.43, erste elektrische Leiterbahnen 5.52, 5.53 und erste Leitungselemente 5.21 - 5.26 an mindestens zwei Kontaktstellen 3.23, 3.25 der ersten Kontaktstellen 3.23 -
3.25 und an mindestens zwei Kontaktstellen 3.33, 3.35 der zweiten Kontaktstellen 3.33 - 3.35 angelegt.

In der ersten Ausführungsform der elektrischen Verschaltung des Sensors 10 gemäss Fig. 9 wird die Betriebsspannung U+, U- über das zweite und dritte Stiftelement 4.3, 4.4 wie folgt an die Messeinheit 3 angelegt:
- Die negative Betriebsspannung U- wird vom zweiten Stiftelement 4.3 über das zweite zweite Leitungselement 5.62 an die zweite vierte Kontaktstelle 5.42 angelegt. Von der zweiten vierten Kontaktstelle 5.42 gelangt die negative Betriebsspannung U- über das vierte erste Leitungselement 5.24 zur dritten zweiten Kontaktstelle 3.35 der zweiten Messschaltung 3.3. Die zweite vierte Kontaktstelle 5.42 ist über die erste erste elektrische Leiterbahn 5.52 elektrisch mit der zweiten dritten Kontaktstelle 5.32 verbunden. Von der zweiten dritten Kontaktstelle 5.32 gelangt die negative Betriebsspannung U-über das dritte erste Leitungselement 5.23 zur dritten ersten Kontaktstelle 3.25 der ersten Messschaltung 3.2.
- Die positive Betriebsspannung U+ wird vom dritten Stiftelement 4.4 über das dritte zweite Leitungselement 5.63 an die dritte dritte Kontaktstelle 5.33 angelegt. Die dritte dritte Kontaktstelle 5.33 ist über die zweite erste elektrische Leiterbahn 5.53 elektrisch mit der dritten vierten Kontaktstelle 5.43 verbunden. Von der dritten vierten Kontaktstelle 5.43 gelangt die positive Betriebsspannung U+ über das sechste erste Leitungselement 5.26 zur ersten zweiten Kontaktstelle 3.33 der zweiten Messschaltung 3.3. Von der dritten dritten Kontaktstelle 5.33 gelangt die positive Betriebsspannung U+ über das erste erste Leitungselement 5.21 zur ersten ersten Kontaktstelle 3.23 der ersten Messschaltung 3.2.

In der ersten Ausführungsform der elektrischen Verschaltung des Sensors 10 gemäss Fig. 9 ist das Messsignal S+, S- an mindestens zwei Stiftelementen 4.2, 4.5 der Stiftelemente 4.2 - 4.5 über zweite Leitungselemente 5.61 - 5.64, dritte Kontaktstellen 5.31 - 5.33, vierte Kontaktstellen 5.41 - 5.43, und erste Leitungselemente 5.21 - 5.26 von mindestens einer Kontaktstelle 3.24 der ersten Kontaktstellen 3.23 - 3.25 und von mindestens einer Kontaktstelle 3.34 der zweiten Kontaktstellen 3.33 - 3.35 abgreifbar.

In der ersten Ausführungsform der elektrischen Verschaltung des Sensors 10 gemäss Fig. 9 ist das Messsignal S+, S- am ersten und vierten Stiftelement 4.2, 4.5 wie folgt von der Messeinheit 3 abgreifbar:
- Das positive Messsignal S+ ist am ersten Stiftelement 4.2 über das erste zweite Leitungselement 5.61, die erste dritte Kontaktstelle 5.31, das zweite erste Leitungselement 5.22 von der zweiten ersten Kontaktstelle 3.24 der ersten Messschaltung 3.2 abgreifbar.
- Das negative Messsignal S- ist am vierten Stiftelement 4.5 über das vierte zweite Leitungselement 5.64, die erste vierte Kontaktstelle 5.41, das fünfte erste Leitungselement 5.25 von der zweiten zweiten Kontaktstelle 3.34 der zweiten Messschaltung 3.3 abgreifbar.

Somit erfolgen in der ersten Ausführungsform der elektrischen Verschaltung des Sensors 10 gemäss Fig. 9 die elektrischen Kontaktierungen des Messelementes 3 mit der Durchführung 4 über sechs erste Leitungselemente 5.21 - 5.26 und vier zweite Leitungselemente 5.61 - 5.64. Mit den insgesamt zehn Leitungselementen 5.21 - 5.26, 5.61 - 5.64 werden durch die radialen Öffnungen 1.31, 1.32 der Gehäusewandung 1.3 zwanzig elektrische Kontaktierungen auf den ersten Kontaktstellen 3.23 - 3.25, den zweiten Kontaktstellen 3.33 -
3.35, den dritten Kontaktstellen 5.31 - 5.33 und den vierten Kontaktstellen 5.41 - 5.43 bewerkstelligt.

In der zweiten Ausführungsform der elektrischen Verschaltung des Sensors 10 gemäss Fig. 10 kontaktiert das erste Stiftelement 4.2 elektrisch die erste fünfte Kontaktstelle 5.91. Das zweite Stiftelement 4.3 kontaktiert elektrisch die zweite fünfte Kontaktstelle 5.92. Das dritte Stiftelement 4.4 kontaktiert elektrisch die dritte fünfte Kontaktstelle 5.93. Das vierte Stiftelement 4.5 kontaktiert elektrisch die vierte fünfte Kontaktstelle 5.94. Die Stiftelemente 4.2 - 4.5 kontaktieren nicht nur die fünften Kontaktstellen 5.91 - 5.94 elektrisch, sondern die Stiftelemente 4.2 - 4.5 sind auch über eine stoffschlüssige Verbindung an den fünften Kontaktstellen 5.91 - 5.94 befestigt. Vorzugsweise ist die stoffschlüssige Verbindung als Lötverbindung ausgebildet.

In der zweiten Ausführungsform des Sensors 10 gemäss Fig. 2 und 4 ist der Kontaktkörper 5.1 in der axialen Durchgangsöffnung 4.10 befestigt. Vorzugsweise ist der Kontaktkörper 5.1 über eine stoffschlüssige Verbindung wie eine Lötverbindung, usw. in der axialen Durchgangsöffnung 4.10 befestigt. Die stoffschlüssige Verbindung ist figürlich nicht dargestellt. Die an den fünften Kontaktstellen 5.91 - 5.94 befestigten Stiftelemente 4.2 - 4.5 sind somit durch den Kontaktkörper 5.1 vom Durchführungskörper 4.1 elektrisch isoliert.

In der zweiten Ausführungsform der elektrischen Verschaltung des Sensors 10 gemäss Fig. 10 wird die Betriebsspannung U+, U- von mindestens zwei Stiftelementen 4.3, 4.4 der Stiftelemente 4.2 - 4.5 über fünfte Kontaktstellen 5.91 -
5.94, dritte Kontaktstellen 5.31 - 5.33, vierte Kontaktstellen 5.41 - 5.43, zweite elektrische Leiterbahnen 5.71 - 5.73, dritte elektrische Leiterbahnen 5.81 - 5.83 und erste Leitungselemente 5.21 - 5.26 an mindestens zwei Kontaktstellen 3.23, 3.25 der ersten Kontaktstellen 3.23 - 3.25 und an mindestens zwei Kontaktstellen 3.33, 3.35 der zweiten Kontaktstellen 3.33 - 3.35 angelegt.

In der zweiten Ausführungsform der elektrischen Verschaltung des Sensors 10 gemäss Fig. 10 wird die Betriebsspannung U+, U- über das zweite und dritte Stiftelement 4.3, 4.4 wie folgt an die Messeinheit 3 angelegt:
- Die negative Betriebsspannung U- wird vom zweiten Stiftelement 4.3 an die zweite fünfte Kontaktstelle 5.92 angelegt. Die zweite fünfte Kontaktstelle 5.92 ist über die zweite dritte elektrische Leiterbahn 5.82 elektrisch mit der zweiten vierten Kontaktstelle 5.42 verbunden. Von der zweiten vierten Kontaktstelle 5.42 gelangt die negative Betriebsspannung U- über das vierte erste Leitungselement 5.24 zur dritten zweiten Kontaktstelle 3.35 der zweiten Messschaltung 3.3. Die zweite fünfte Kontaktstelle 5.92 ist über die zweite zweite elektrische Leiterbahn 5.72 elektrisch mit der zweiten dritten Kontaktstelle 5.32 verbunden. Von der zweiten dritten Kontaktstelle 5.32 gelangt die negative Betriebsspannung U-über das dritte erste Leitungselement 5.23 zur dritten ersten Kontaktstelle 3.25 der ersten Messschaltung 3.2. Und von der zweiten vierten Kontaktstelle 5.42 gelangt die negative Betriebsspannung U- über das vierte erste Leitungselement 5.24 zur dritten zweiten Kontaktstelle 3.35 der zweiten Messschaltung 3.3.

- Die positive Betriebsspannung U+ wird vom dritten Stiftelement 4.4 an die dritte fünfte Kontaktstelle 5.93 angelegt. Die dritte fünfte Kontaktstelle 5.93 ist über die dritte dritte elektrische Leiterbahn 5.83 elektrisch mit der dritten vierten Kontaktstelle 5.43 verbunden. Von der dritten vierten Kontaktstelle 5.43 gelangt die positive Betriebsspannung U+ über das sechste erste Leitungselement 5.26 zur ersten zweiten Kontaktstelle 3.33 der zweiten Messschaltung 3.3. Die dritte fünfte Kontaktstelle 5.93 ist über die dritte zweite elektrische Leiterbahn 5.73 elektrisch mit der dritten dritten Kontaktstelle 5.33 verbunden. Von der dritten dritten Kontaktstelle 5.33 gelangt die positive Betriebsspannung U+ über das erste erste Leitungselement 5.21 zur ersten ersten Kontaktstelle 3.23 der ersten Messschaltung 3.2.

In der zweiten Ausführungsform der elektrischen Verschaltung des Sensors 10 gemäss Fig. 10 ist das Messsignal S+, S- an mindestens zwei Stiftelementen 4.2, 4.5 der Stiftelemente 4.2 - 4.5 über dritte Kontaktstellen 5.31 - 5.33, vierte Kontaktstellen 5.41 - 5.43, zweite elektrische Leiterbahnen 5.71 - 5.73, dritte elektrische Leiterbahnen 5.81 -
5.83 und erste Leitungselemente 5.21 - 5.26 von mindestens einer Kontaktstelle 3.24 der ersten Kontaktstellen 3.23 -
3.25 und von mindestens einer Kontaktstelle 3.34 der zweiten Kontaktstellen 3.33 - 3.35 abgreifbar.

In der zweiten Ausführungsform der elektrischen Verschaltung des Sensors 10 gemäss Fig. 10 ist das Messsignal S+, S- am ersten und vierten Stiftelement 4.2, 4.5 wie folgt von der Messeinheit 3 abgreifbar:
- Das positive Messsignal S+ ist am ersten Stiftelement 4.2 über die erste fünfte Kontaktstelle 5.91, die erste zweite elektrische Leiterbahn 5.71, die erste dritte Kontaktstelle 5.31, das zweite erste Leitungselement 5.22 von der zweiten ersten Kontaktstelle 3.24 der ersten Messschaltung 3.2 abgreifbar.
- Das negative Messsignal S- ist am vierten Stiftelement 4.5 über die vierte fünfte Kontaktstelle 5.94, die erste dritte elektrische Leiterbahn 5.81, die erste vierte Kontaktstelle 5.41, das fünfte erste Leitungselement 5.25 von der zweiten zweiten Kontaktstelle 3.34 der zweiten Messschaltung 3.3 abgreifbar.
- Somit erfolgen in der zweiten Ausführungsform der elektrischen Verschaltung des Sensors 10 gemäss Fig. 10 die elektrischen Kontaktierungen des Messelementes 3 mit der Durchführung 4 über sechs erste Leitungselemente 5.21 - 5.26. Mit lediglich sechs Leitungselementen 5.21 - 5.26 werden durch die radialen Öffnungen 1.31, 1.32 der Gehäusewandung 1.3 zwölf elektrische Kontaktierungen auf den ersten Kontaktstellen 3.23 - 3.25, den zweiten Kontaktstellen 3.33 - 3.35, den dritten Kontaktstellen 5.31 - 5.33 und den vierten Kontaktstellen 5.41 - 5.43 bewerkstelligt.

### DAS ÜBERTRAGUNGSELEMENT 6

Das Übertragungselement 6 hat die Funktion, den Druck P im Hohlraum 0 vom Membranelement 2 auf die Messeinheit 3 zu leiten. Das Übertragungselement 6 hat die weitere Funktion, Unterschiede bei den Wärmeausdehnungskoeffizienten des Materials vom Gehäuseteil 1, vom Membranelement 2 und von der Messeinheit 3 zu mildern.

In den beiden Ausführungsformen des Sensors 10 gemäss Fig. 1 bis 4 ist das Übertragungselement 6 aus einem widerstandsfähigen, metallischen Werkstoff wie ein hochlegierter Edelstahl, usw. Das Übertragungselement 6 ist zylinderförmig.

Der zu messende Druck P kann lokale Druckspitzen aufweisen, welche Druckspitzen deutlich grösser als der Druck P sind und welche Druckspitzen lokal begrenzt auf das Membranelement 2 treffen. Um zu vermeiden, dass die Druckspitzen ungehindert vom Membranelement 2 zur Messeinheit 3 gelangen und dort einen unerwünschten Bruch der Messeinheit 3 verursachen, ist das Übertragungselement 6 auf der Längsachse X zwischen dem Membranelement 2 und der Messeinheit 3 angeordnet. Druckspitzen gelangen somit vom Membranelement 2 in das Übertagungselement 6 und werden über die Länge des Übertragungselementes 6 zur Messeinheit 3 übertragen. Dabei weiten sich die Druckspitzen auf eine unschädliche Grösse auf.

Der Sensor 10 ist für den Einsatz bei einer Temperatur von bis zu 450 °C ausgelegt. Bei so hohen Temperaturen führen die Unterschiede beim Wärmeausdehnungskoeffizient des Materials vom Gehäuseteil 1, vom Membranelement 2 und von der Messeinheit 3 zu einer thermischen Belastung, welche eine unerwünschte Beschädigung des Sensors 10 zur Folge haben kann. Um diese thermische Belastung zu mildern, weist das Material des Übertragungselementes 6 einen Wärmeausdehnungskoeffizienten auf, welcher vom Betrag her grösser als der Wärmeausdehnungskoeffizient des Materials vom Gehäuseteil 1, vom Membranelement 2 und von der Messeinheit 3 ist.

### DAS ÄUSSERE GEHÄUSETEIL 7

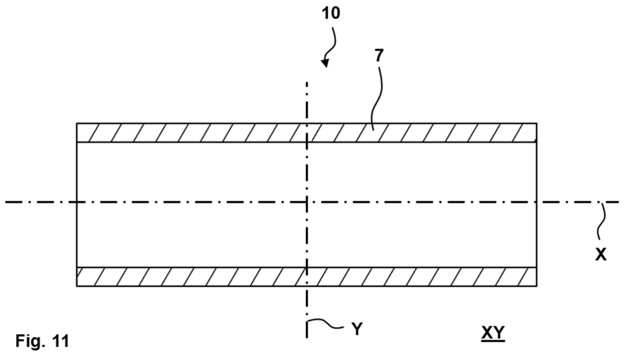

Für die beiden Ausführungsformen des Sensors 10 gemäss Fig. 1 bis 4 ist das äussere Gehäuseteil 7 identisch und ist in Fig. 11 dargestellt. Das äussere Gehäuseteil 7 hat die Funktion, die radialen Öffnungen 1.31, 1.32 der Gehäusewandung 1.3 des inneren Gehäuseteils 2 zu verschliessen.

Das äussere Gehäuseteil 7 ist hohlzylinderförmig. Das äussere Gehäuseteil 7 ist aus einem widerstandsfähigen, metallischen Werkstoff wie ein hochlegierter Edelstahl, usw. Vorzugsweise ist das äussere Gehäuseteil 7 einstückig gefertigt.

In Radialrichtung ist ein Innendurchmesser des äusseren Gehäuseteiles 7 so dimensioniert, dass das äussere Gehäuseteil 7 in Längsrichtung über die Durchführung 4 auf das innere Gehäuseteil 1 schiebbar ist. Im auf das innere Gehäuseteil 1 geschobenen Zustand verschliesst das äussere Gehäuseteil 7 die radialen Öffnungen 1.31, 1.32 der Gehäusewandung 1.3. Vorzugsweise ist in Radialrichtung ein Aussendurchmesser des äusseren Gehäuseteiles 7 weitgehend gleichgross wie der Aussendurchmesser der Membranwandung 2.3.

Vorzugsweise ist das über die Durchführung 4 auf das innere Gehäuseteil 1 geschobene äussere Gehäuseteil 7 über eine dritte stoffschlüssige Verbindung 7.1 am inneren Gehäuseteil 1 und am Membranelement 2 befestigt. Vorzugsweise ist die dritte stoffschlüssige Verbindung 7.1 gemäss Fig. 13 und 15 als mindestens eine die Längsachse X umlaufende Schweissnaht ausgebildet.

### DAS KABEL 8

Für die beiden Ausführungsformen des Sensors 10 gemäss Fig. 1 bis 4 ist das Kabel 8 identisch. Das Kabel 8 hat die Funktion, das Messsignal S+, S- ausserhalb des Sensors 10 von der Durchführung 4 abzuleiten und die Betriebsspannung U+, U- ausserhalb des Sensors 10 an der Durchführung 4 anzulegen.

Das Kabel 8 ist in Fig. 13 und 15 dargestellt. Das Kabel 8 weist dritte Leitungselemente 8.2 - 8.5 aus elektrisch leitfähigem Material wie Kupfer, Silber, Gold, usw. auf.

Vorzugsweise weist das Kabel 8 vier dritte Leitungselemente 8.2 - 8.5 auf. Die dritten Leitungselemente 8.2 - 8.5 umfassen ein erstes drittes Leitungselement 8.2, ein zweites drittes Leitungselement 8.3, ein drittes drittes Leitungselement 8.4 und ein viertes drittes Leitungselement 8.5. Gemäss Fig. 9 und 10 kontaktiert das erste dritte Leitungselement 8.2 elektrisch mit dem ersten Stiftelement 4.2 und leitet das positive Messsignal S+ ab. Das zweite dritte Leitungselement 8.3 kontaktiert elektrisch mit dem zweiten Stiftelement 4.3 und legt die negative Betriebsspannung U-an. Das dritte dritte Leitungselement 8.4 kontaktiert elektrisch mit dem dritten Stiftelement 4.4 und legt die positive Betriebsspannung U+ an. Das vierte dritte Leitungselement 8.5 kontaktiert elektrisch mit dem vierten Stiftelement 4.5 und leitet das negative Messsignal S- ab.

Das Kabel 8 weist eine Kabelisolation 8.1 auf. Die Kabelisolation 8.1 besteht aus elektrisch isolierendem Material wie Polytetrafluorethylen, usw.

Die dritten Leitungselemente 8.2 - 8.5 sind in der Kabelisolation 8.1 eingebettet und durch die Kabelisolation 8.1 gegeneinander elektrisch isoliert.

Das Kabel 8 weist einen Kabelmantel 8.6 auf. Der Kabelmantel 8.6 besteht aus mechanisch beständigem Material wie Polyethylene, Polyvinylchlorid, usw. Der Kabelmantel 8.6 umgibt die Kabelisolation 8.1 in Längsrichtung radial aussenseitig und schützt die in der Kabelisolation 8.1 eingebetteten dritten Leitungselemente 8.2 - 8.5 vor mechanischer Beschädigung.

Der Kabelmantel 8.6 ist am äusseren Gehäuseteil 7 befestigt. Die Befestigung kann durch plastische Verformung wie Crimpen, usw. ausgebildet sein.

### DAS FERTIGUNGSVERFAHREN

Das Verfahren zur Fertigung des Sensors 10 weist mehrere Schritte S1 - S10 auf. Die Schritte S1 - S10 umfassen einen ersten Schritt S1, einen zweiten Schritt S2, einen dritten Schritt S3, einen vierten Schritt S4, einen fünften Schritt S5, einen sechsten Schritt S6, einen siebten Schritt S7, einen achten Schritt S8, einen neunten Schritt S9 und einen zehnten Schritt S10.

Für die beiden Ausführungsformen des Sensors 10 gemäss Fig. 1 bis 4 werden im ersten Schritt S1 das innere Gehäuseteil 1, das Membranelement 2, die Messeinheit 3 und die Durchführung 4 bereitgestellt.

Für die beiden Ausführungsformen des Sensors 10 gemäss Fig. 1 bis 4 wird im ersten Schritt S1 vorzugsweise auch die Ableiteinheit 5 bereitgestellt.

Für die beiden Ausführungsformen des Sensors 10 gemäss Fig. 1 bis 4 wird im ersten Schritt S1 vorzugsweise auch das Übertragungselement 6 bereitgestellt.

In der zweiten Ausführungsform des Sensors 10 gemäss Fig. 2 und 4 werden im ersten Schritt S1 vorzugsweise die Stiftelemente 4.2 - 4.5 der Durchführung 4 über die stoffschlüssige Verbindung an den fünften Kontaktstellen 5.91 - 5.94 der Ableiteinheit 5 befestigt. Auch wird die Ableiteinheit 5 in die axiale Öffnung 4.10 des Durchführungskörpers 4.1 geschoben und der Kontaktkörper 5.1 der Ableiteinheit 5 über die stoffschlüssige Verbindung in der axialen Durchgangsöffnung 4.10 befestigt.

Für die beiden Ausführungsformen des Sensors 10 gemäss Fig. 1 bis 4 wird im ersten Schritt S1 vorzugsweise der Durchführungskörper 4.1 der Durchführung 4 auf das zweite Gehäuseende 1.2 des inneren Gehäuseteils 1 gesetzt und über die zweite stoffschlüssige Verbindung 4.7 an der Gehäusewandung 1.3 befestigt.

In der zweiten Ausführungsform des Sensors 10 gemäss Fig. 2 und 4 wird im ersten Schritt S1 vorzugsweise durch die Befestigung des Durchführungskörper 4.1 der Durchführung 4 an der Gehäusewandung 1.3 die in der axialen Durchgangsöffnung 4.10 der Durchführung 4 befestigte Ableiteinheit 5 im Hohlraum 0 angeordnet.

Für die beiden Ausführungsformen des Sensors 10 gemäss Fig. 1 bis 4 wird im zweiten Schritt S2 die Messeinheit 3 durch die axiale Öffnung 1.11 am ersten Gehäuseende 1.1 in Längsrichtung in den Hohlraum 0 geschoben.

In der ersten Ausführungsform des Sensors 10 gemäss Fig. 1 und 3 werden im zweiten Schritt S2 vorzugsweise die Ableiteinheit 5 und die Messeinheit 3 durch die axiale Öffnung 1.11 am ersten Gehäuseende 1.1 in Längsrichtung in den Hohlraum 0 geschoben. Im im Hohlraum 0 angeordneten Zustand liegt die Ableiteinheit 5 einseitig am Auflagekörper 1.4 des inneren Gehäuseteiles 1 an und die Messeinheit 3 liegt einseitig an der Ableiteinheit 5 an.

In der zweiten Ausführungsform des Sensors 10 gemäss Fig. 2 und 4 werden im zweiten Schritt S2 vorzugsweise der Isolatorkörper 1.5 und die Messeinheit 3 durch die axiale Öffnung 1.11 am ersten Gehäuseende 1.1 in Längsrichtung in den Hohlraum 0 geschoben. Im im Hohlraum 0 angeordneten Zustand liegt der Isolatorkörper 1.5 einseitig am Auflagekörper 1.4 des inneren Gehäuseteiles 1 an und die Messeinheit 3 liegt einseitig am Isolatorkörper 1.5 an.

Für die beiden Ausführungsformen des Sensors 10 gemäss Fig. 1 bis 4 werden im zweiten Schritt S2 vorzugsweise die Messeinheit 3 und das Übertragungselement 6 durch die axiale Öffnung 1.11 am ersten Gehäuseende 1.1 in Längsrichtung in den Hohlraum 0 geschoben.

In der ersten Ausführungsform des Sensors 10 gemäss Fig. 1 und 3 liegt die Ableiteinheit 5 im im Hohlraum 0 angeordneten Zustand einseitig am Auflagekörper 1.4 an, die Messeinheit 3 liegt einseitig an der Ableiteinheit 5 an und das Übertragungselement 6 liegt einseitig an der Messeinheit 3 an.

In der zweiten Ausführungsform des Sensors 10 gemäss Fig. 2 und 4 erfolgt das Einschieben von Isolatorkörper 1.5, Messeinheit 3 und Übertragungselement 6 in den Hohlraum 0 derart, dass im im Hohlraum 0 angeordneten Zustand der Isolatorkörper 1.5 einseitig am Auflagekörper 1.4 des inneren Gehäuseteiles 1 anliegt, die Messeinheit 3 einseitig am Isolatorkörper 1.5 anliegt und das Übertragungselement 6 einseitig an der Messeinheit 3 anliegt.

Für die beiden Ausführungsformen des Sensors 10 gemäss Fig. 1 bis 4 wird im dritten Schritt S3 das Membranelement 2 am ersten Gehäuseende 1.1 befestigt.

Für die beiden Ausführungsformen des Sensors 10 gemäss Fig. 1 bis 4 wird im dritten Schritt S3 vorzugsweise das Membranelement 2 auf die axiale Öffnung 1.11 des ersten Gehäuseendes 1.1 gesetzt und die Membranwandung 2.3 über die erste stoffschlüssige Verbindung 2.4 an der Gehäusewandung 1.3 befestigt.

Für die beiden Ausführungsformen des Sensors 10 gemäss Fig. 1 bis 4 werden im vierten Schritt S4 Leitungselemente 5.21 - 5.26, 5.61 - 5.64 bereitgestellt.

Für die beiden Ausführungsformen des Sensors 10 gemäss Fig. 1 bis 4 wird im fünften Schritt S5 die Messeinheit 3 mittels der Leitungselemente 5.21 - 5.26, 5.61 - 5.64 mit der Durchführung 4 elektrisch kontaktiert.

Für die beiden Ausführungsformen des Sensors 10 gemäss Fig. 1 bis 4 werden im fünften Schritt S5 vorzugsweise die beiden Messschaltungen 3.2, 3.3 mittels der Leitungselemente 5.21 - 5.26, 5.61 - 5.64 mit der Durchführung 4 elektrisch kontaktiert.

Für die beiden Ausführungsformen des Sensors 10 gemäss Fig. 1 bis 4 wird im fünften Schritt S5 vorzugsweise die Messeinheit 3 mittels der Leitungselemente 5.21 - 5.26, 5.61 - 5.64 durch die radialen Öffnungen 1.31, 1.32 mit der Durchführung 4 elektrisch kontaktiert.

Für die beiden Ausführungsformen des Sensors 10 gemäss Fig. 1 bis 4 werden im fünften Schritt S5 die ersten Leitungselemente 5.21 - 5.26 durch die radialen Öffnungen 1.31, 1.32 elektrisch mit den ersten Kontaktstellen 3.23 -
3.25 auf der ersten Tragfläche 3.11 der Messeinheit 3 und mit den zweiten Kontaktstellen 3.33 - 3.35 auf der zweiten Tragfläche 3.12 der Messeinheit 3 sowie den dritten Kontaktstellen 5.31 - 5.33 auf der ersten Kontaktfläche 5.11 der Ableiteinheit 5 und mit den vierten Kontaktstellen 5.41 - 5.43 auf der zweiten Kontaktfläche 5.12 der Ableiteinheit 5 kontaktiert.

In der ersten Ausführungsform des Sensors 10 gemäss Fig. 1 und 3 werden im fünften Schritt S5 vorzugsweise die zweiten Leitungselemente 5.61 - 5.64 durch die radialen Öffnungen 1.31, 1.32 elektrisch mit den dritten Kontaktstellen 5.31 - 5.33 auf der ersten Kontaktfläche 5.11 der Ableiteinheit 5 und mit den vierten Kontaktstellen 5.41 - 5.43 auf der zweiten Kontaktfläche 5.12 der Ableiteinheit 5 sowie den Stiftelementen 4.2 - 4.5 der Durchführung 4 kontaktiert.

Für die beiden Ausführungsformen des Sensors 10 gemäss Fig. 1 bis 4 wird im sechsten Schritt S6 ein äusseres Gehäuseteil 7 bereitgestellt.

Für die beiden Ausführungsformen des Sensors 10 gemäss Fig. 1 bis 4 wird im siebten Schritt S7 das äussere Gehäuseteil 7 in Längsrichtung auf das innere Gehäuseteil 1 geschoben. Im auf das innere Gehäuseteil 1 geschobenen Zustand verschliesst das äussere Gehäuseteil 7 die radialen Öffnungen 1.31, 1.32 der Gehäusewandung 1.3.

Für die beiden Ausführungsformen des Sensors 10 gemäss Fig. 1 bis 4 wird im siebten Schritt S7 das äussere Gehäuseteil 7 am ersten Gehäuseende 1.1 befestigt. Vorzugsweise wird das äussere Gehäuseteil 7 im siebten Schritt S7 über die dritte stoffschlüssige Verbindung 7.1 an der Gehäusewandung 1.3 und an der Membranwandung 2.3 befestigt.

Für die beiden Ausführungsformen des Sensors 10 gemäss Fig. 1 bis 4 wird im achten Schritt S8 ein Kabel 8 bereitgestellt.

Für die beiden Ausführungsformen des Sensors 10 gemäss Fig. 1 bis 4 werden im neunten Schritt S9 die dritten Leitungselemente 8.2 - 8.5 des Kabels 8 elektrisch mit den Stiftelementen 4.2 - 4.5 der Durchführung 4 kontaktiert.

Für die beiden Ausführungsformen des Sensors 10 gemäss Fig. 1 bis 4 wird im zehnten Schritt S10 der Kabelmantel 8.6 des Kabels 8 am äusseren Gehäuseteil 7 befestigt.

### Bezugszeichenliste

- 0: Hohlraum
- 1: inneres Gehäuseteil
- 1.1, 1.2: Gehäuseenden
- 1.11: axiale Öffnung
- 1.3: Gehäusewandung
- 1.31, 1.32: radiale Öffnungen
- 1.4: Auflagekörper
- 1.5: Isolatorkörper
- 2: Membranelement
- 2.1: Stempel
- 2.2: Gelenk
- 2.3: Membranwandung
- 2.4: erste stoffschlüssige Verbindung
- 3: Messeinheit
- 3.1: Tragkörper
- 3.11, 3.12: Tragflächen
- 3.2: erste Messschaltung
- 3.21, 3.22: erste elektrische Widerstandselemente
- 3.23 - 3.25: erste Kontaktstellen
- 3.3: zweite Messschaltung
- 3.31, 3.32: zweite elektrische Widerstandselemente
- 3.33 - 3.35: zweite Kontaktstellen
- 4: Durchführung
- 4.1: Durchführungskörper
- 4.10: axiale Durchgangsöffnung
- 4.2 - 4.5: Stiftelemente
- 4.21 - 4.51: sechste Kontaktstellen
- 4.6: Isolierelement
- 4.7: zweite stoffschlüssige Verbindung
- 5: Ableiteinheit
- 5.1: Kontaktkörper
- 5.10: Vertiefung
- 5.11, 5.12: Kontaktflächen
- 5.13: weitere Oberfläche
- 5.21 - 5.26: erste Leitungselemente
- 5.31 - 5.33: dritte Kontaktstellen
- 5.41 - 5.43: vierte Kontaktstellen
- 5.52, 5.53: erste elektrische Leiterbahnen
- 5.61 - 5.64: zweite Leitungselemente
- 5.71 - 5.73: zweite elektrische Leiterbahnen
- 5.81 - 5.83: dritte elektrische Leiterbahnen
- 5.91 - 5.94: fünfte Kontaktstellen
- 6: Übertragungselement
- 7: äusseres Gehäuseteil
- 7.1: dritte stoffschlüssige Verbindung
- 7.2: vierte stoffschlüssige Verbindung
- 8: Kabel
- 8.1: Kabelisolation
- 8.2 - 8.5: dritte Leitungselemente
- 8.6: Kabelmantel
- 10: Sensor
- A - A: Schnittverlauf
- N1, N2: Tragflächennormale
- N1', N2': Kontaktflächennormale
- P: Druck
- S1 - S10: Schritte
- S+, S-: Messignal
- U+, U-: Betriebsspannung
- X, Y, Z: Achse
- XY, XZ, YZ: Ebene

## Patentansprüche

1. Sensor (10) zur Messung eines Drucks (P); mit einem inneren Gehäuseteil (1), einem Membranelement (2), einer Messeinheit (3) und einer Durchführung (4); welches innere Gehäuseteil (1) und welches Membranelement (2) hohlzylinderförmig sind und einen Hohlraum (0) umschliessen, welches innere Gehäuseteil (1) in einer axialen Richtung durch ein erstes Gehäuseende (1.1) und ein zweites Gehäuseende (1.2) begrenzt ist, welches innere Gehäuseteil (1) in einer radialen Richtung durch eine Gehäusewandung (1.3) begrenzt ist; welches Membranelement (2) am ersten Gehäuseende (1.1) befestigt ist; welcher Hohlraum (0) durch eine axiale Öffnung (1.11) am ersten Gehäuseende (1.1) in der axialen Richtung vom inneren Gehäuseteil (1) zum Membranelement (2) reicht; welche Durchführung (4) am zweiten Gehäuseende (1.2) befestigt ist und den Hohlraum (0) abschliesst; welches Membranelement (2) eingerichtet ist, den zu messenden Druck (P) in den Hohlraum (0) zu leiten; welche Messeinheit (3) im Hohlraum (0) angeordnet ist, welche Messeinheit (3) nach dem piezoresistivem Messprinzip arbeitet und eingerichtet ist, unter der Wirkung des eingeleiteten Drucks (P) mindestens ein Messsignal (S+, S-) zu erzeugen; welche Durchführung (4) eingerichtet ist, das Messsignal (S+, S-) aus dem Hohlraum (0) nach ausserhalb des inneren Gehäusesteiles (1) zu leiten; **dadurch gekennzeichnet, dass** die Messeinheit (3) einen Tragkörper (3.1), eine erste Messschaltung (3.2) und eine zweite Messschaltung (3.3) aufweist; dass der Tragkörper (3.1) eine erste Tragfläche (3.11) und eine zweite Tragfläche (3.12) aufweist, welche erste Tragfläche (3.11) die erste Messschaltung (3.2) trägt und welche zweite Tragfläche (3.12) die zweite Messschaltung (3.3) trägt; dass die erste Tragfläche (3.11) eine erste Tragflächennormale (N1) aufweist; dass die zweite Tragfläche (3.12) eine zweite Tragflächennormale (N2) aufweist; dass die Tragflächennormalen (N1, N2) in einem Winkel grösser Null zueinander stehen; dass der Sensor (10) Leitungselemente (5.21 - 5.26, 5.61 - 5.64) aufweist; und dass die beiden Messschaltungen (3.2, 3.3) der Messeinheit (3) mittels der Leitungselemente (5.21 - 5.26, 5.61 - 5.64) mit der Durchführung elektrisch kontaktiert werden.

2. Sensor (10) gemäss Anspruch 1, **dadurch gekennzeichnet, dass** der Tragkörper (3.1) aus elektrisch isolierendem Material ist; dass die erste Messschaltung (3.2) erste Kontaktstellen (3.23 - 3.25) aus elektrisch leitfähigem Material aufweist; dass die zweite Messschaltung (3.3) zweite Kontaktstellen (3.33 - 3.35) aus elektrisch leitfähigem Material aufweist; dass sich die beiden Messschaltungen (3.2, 3.3) zu einer Wheatstone'schen Brückenschaltung zusammensetzen; und dass bei Anlegen einer Betriebsspannung (U+, U-) an mindestens zwei Kontaktstellen (3.23, 3.25) der ersten Kontaktstellen (3.23 - 3.25) und an mindestens zwei Kontaktstellen (3.33, 3.35) der zweiten Kontaktstellen (3.33 - 3.35) der auf die Wheatstone'schen Brückenschaltung eingeleitete Druck (P) eine Widerstandsänderung bewirkt, welche Widerstandsänderung an mindestens einer Kontaktstelle (3.24) der ersten Kontaktstellen (3.23 - 3.25) und an mindestens einer Kontaktstelle (3.34) der zweiten Kontaktstellen (3.33 - 3.35) als Messsignal (S+, S-) abgreifbar ist.

3. Sensor (10) gemäss Anspruch 2, **dadurch gekennzeichnet, dass** die Gehäusewandung (1.3) eine erste radiale Öffnung (1.31) und eine zweite radiale Öffnung (1.32) aufweist, welche radiale Öffnungen (1.31, 1.32) in der radialen Richtung von ausserhalb des inneren Gehäuseteiles (1) zur Messeinheit (3) im Hohlraum (0) reichen; dass die erste Tragflächennormale (N1) in der radialen Richtung in einem spitzen Winkel durch die erste radiale Öffnung (1.31) tritt; und dass die zweite Tragflächennormale (N2) in der radialen Richtung in einem spitzen Winkel durch die zweite radiale Öffnung (1.32) tritt.

4. Sensor (10) gemäss Anspruch 3, **dadurch gekennzeichnet, dass** sich die beiden Tragflächen (3.11, 3.12) parallel zur axialen Richtung in einer Querebene (XY) erstrecken; dass die ersten Kontaktstellen (3.23 - 3.25) auf der ersten Tragfläche (3.11) durch die erste radiale Öffnung (1.31) in der radialen Richtung von ausserhalb des inneren Gehäuseteiles (1) zugänglich sind; und dass die zweiten Kontaktstellen (3.33 - 3.35) auf der zweiten Tragfläche (3.12) durch die zweite radiale Öffnung (1.32) in der radialen Richtung von ausserhalb des inneren Gehäuseteiles (1) zugänglich sind.

5. Sensor (10) gemäss Anspruch 4, **dadurch gekennzeichnet, dass** der Sensor (10) eine Ableiteinheit (5) aufweist, welche Ableiteinheit (5) einen Kontaktkörper (5.1) aus elektrisch isolierendem Material aufweist; dass der Kontaktkörper (5.1) eine erste Kontaktfläche (5.11) und eine zweite Kontaktfläche (5.12) aufweist; dass die erste Kontaktfläche (5.11) eine erste Kontaktflächennormale (N1') aufweist; dass die zweite Kontaktfläche eine zweite Kontaktflächennormale (N2') aufweist; und dass die Kontaktflächennormalen (N1', N2') in einem Winkel grösser Null zueinander stehen.

6. Sensor (10) gemäss Anspruch 5, **dadurch gekennzeichnet, dass** die Ableiteinheit (5) dritte Kontaktstellen (5.31 - 5.33) und vierte Kontaktstellen (5.41 - 5.43) aus elektrisch leitfähigem Material aufweist, welche erste Kontaktfläche (5.11) die dritten Kontaktstellen (5.31 - 5.33) trägt und welche zweite Kontaktfläche (5.12) die vierten Kontaktstellen (5.41 - 5.43) trägt; und dass die erste Kontaktflächennormale (N1') in der radialen Richtung in einem spitzen Winkel durch die erste radiale Öffnung (1.31) tritt und die zweite Kontaktflächennormale (N2') in der radialen Richtung in einem spitzen Winkel durch die zweite radiale Öffnung (1.32) tritt.

7. Sensor (10) gemäss Anspruch 6, **dadurch gekennzeichnet, dass** sich die beiden Kontaktflächen (5.11, 5.12) parallel zur axialen Richtung in einer Querebene (XY) erstrecken; dass die dritten Kontaktstellen (5.31 - 5.33) auf der ersten Kontaktfläche (5.11) durch die erste radiale Öffnung (1.31) in der radialen Richtung von ausserhalb des inneren Gehäuseteiles (1) zugänglich sind; und dass die vierten Kontaktstellen (5.41 - 5.43) auf der zweiten Kontaktfläche (5.12) durch die zweite radiale Öffnung (1.32) in der radialen Richtung von ausserhalb des inneren Gehäuseteiles (1) zugänglich sind.

8. Sensor (10) gemäss Anspruch 7, **dadurch gekennzeichnet, dass** die Leitungselemente (5.21 - 5.26, 5.61 - 5.64) erste Leitungselemente (5.21 - 5.26) aus elektrisch leitfähigem Material umfassen, welche ersten Leitungselemente (5.21 - 5.26) die ersten Kontaktstellen (3.23 - 3.25) und die zweiten Kontaktstellen (3.33 - 3.35) mit den dritten Kontaktstellen (5.31 - 5.33) und den vierten Kontaktstellen (5.41 - 5.43) elektrisch kontaktieren.

9. Sensor (10) gemäss Anspruch 8, **dadurch gekennzeichnet, dass** die Durchführung (4) Stiftelemente (4.2 - 4.5) aus elektrisch leitfähigem Material aufweist; dass die Leitungselemente (5.21 - 5.26, 5.61 - 5.64) zweite Leitungselemente (5.61 - 5.64) aus elektrisch leitfähigem Material umfassen, welche zweiten Leitungselemente (5.61 - 5.64) die dritten Kontaktstellen (5.31 - 5.33) und die vierten Kontaktstellen (5.41 - 5.43) mit den Stiftelementen (4.2 - 4.5) elektrisch kontaktieren.

10. Sensor (10) gemäss Anspruch 8, **dadurch gekennzeichnet, dass** die Durchführung (4) Stiftelemente (4.2 - 4.5) aus elektrisch leitfähigem Material aufweist; dass die Ableiteinheit (5) fünfte Kontaktstellen (5.91 - 5.94) aus elektrisch leitfähigem Material aufweist; dass der Kontaktkörper (5.1) eine weitere Kontaktfläche (5.13) aufweist, welche weitere Kontaktfläche (5.13) an die erste und zweite Kontaktfläche (5.11, 5.12) grenzt, welche weitere Kontaktfläche (5.13) die fünften Kontaktstellen (5.91 - 5.94) trägt; und dass die Stiftelemente (4.2 - 4.5) elektrisch mit den fünften Kontaktstellen (5.91 - 5.94) kontaktieren.

11. Sensor (10) gemäss einem der Ansprüche 1 bis 10, **dadurch gekennzeichnet, dass** der Sensor (10) ein äusseres Gehäuseteil (7) aufweist, welches äussere Gehäuseteil (7) in der axialen Richtung auf das innere Gehäuseteil (1) geschoben ist und im auf das innere Gehäuseteil (1) geschobenen Zustand die radialen Öffnungen (1.31, 1.32) der Gehäusewandung (1.3) des inneren Gehäuseteils (2) verschliesst.

12. Verfahren zur Fertigung eines Sensor (10) zur Messung eines Drucks (P); mit einem inneren Gehäuseteil (1), einem Membranelement (2), einer Messeinheit (3) und einer Durchführung (4); welches innere Gehäuseteil (1) und welches Membranelement (2) hohlzylinderförmig sind und einen Hohlraum (0) umschliessen; welches innere Gehäuseteil (1) in einer axialen Richtung durch ein erstes Gehäuseende (1.1) und ein zweites Gehäuseende (1.2) begrenzt ist, welches innere Gehäuseteil (1) in einer radialen Richtung durch eine Gehäusewandung (1.3) begrenzt ist; welches Membranelement (2) am ersten Gehäuseende (1.1) befestigt ist; welcher Hohlraum (0) durch eine axiale Öffnung (1.11) am ersten Gehäuseende (1.1) in der axialen Richtung vom inneren Gehäuseteil (1) zum Membranelement (2) reicht; welche Durchführung (4) am zweiten Gehäuseende (1.2) befestigt ist und den Hohlraum (0) abschliesst; welches Membranelement (2) eingerichtet ist, den zu messenden Druck (P) in den Hohlraum (0) zu leiten; welche Messeinheit (3) im Hohlraum (0) angeordnet ist, welche Messeinheit (3) nach dem piezoresistivem Messprinzip arbeitet und eingerichtet ist, unter der Wirkung des eingeleiteten Drucks (P) mindestens ein Messsignal (S+, S-) zu erzeugen; welche Durchführung (4) eingerichtet ist, das Messsignal (S+, S-) aus dem Hohlraum (0) nach ausserhalb des inneren Gehäusesteiles (1) zu leiten; **dadurch gekennzeichnet, dass** in einem ersten Schritt (S1) das innere Gehäuseteil (1), das Membranelement (2), die Messeinheit (3) und die Durchführung (4) bereitgestellt werden; dass in einem zweiten Schritt (S2) die Messeinheit (3) durch die axiale Öffnung (1.11) am ersten Gehäuseende (1.1) in der axialen Richtung in den Hohlraum (0) geschoben wird; dass in einem dritten Schritt (S3) das Membranelement (2) am ersten Gehäuseende (1.1) befestigt wird; dass in einem vierten Schritt (S4) Leitungselemente (5.21 - 5.26, 5.61 - 5.64) bereitgestellt werden; dass die Messeinheit (3) einen Tragkörper (3.1), eine erste Messschaltung (3.2) und eine zweite Messschaltung (3.3) aufweist, welcher Tragkörper (3.1) eine erste Tragfläche (3.11) und eine zweite Tragfläche (3.12) aufweist, welche erste Tragfläche (3.11) die erste Messschaltung (3.2) trägt und welche zweite Tragfläche (3.12) die zweite Messschaltung (3.3) trägt, welche erste Tragfläche (3.11) eine erste Tragflächennormale (N1) aufweist, welche zweite Tragfläche (3.12) eine zweite Tragflächennormale (N2) aufweist, welche Tragflächennormalen (N1, N2) in einem Winkel grösser Null zueinander stehen und dass in einem fünften Schritt (S5) die beiden Messschaltungen (3.2, 3.3) der Messeinheit (3) mittels der Leitungselemente (5.21 - 5.26, 5.61 - 5.64) mit der Durchführung (4) elektrisch kontaktiert werden.

13. Verfahren gemäss Anspruch 12, **dadurch gekennzeichnet, dass** die Gehäusewandung (1.3) radiale Öffnungen (1.31, 1.32) aufweist, welche in Radialrichtung von ausserhalb des inneren Gehäuseteiles (1) zur Messeinheit (3) im Hohlraum (0) reichen, welche radialen Öffnungen (1.31, 1.32) eine erste radiale Öffnung (1.31) und eine zweite radiale Öffnung (1.32) umfassen, welcher Tragkörper (3.1) aus elektrisch isolierendem Material ist, welche erste Messschaltung (3.2) erste Kontaktstellen (3.23 - 3.25) aus elektrisch leitfähigem Material aufweist, welche zweite Messschaltung (3.3) zweite Kontaktstellen (3.33 - 3.35) aus elektrisch leitfähigem Material aufweist, und im zweiten Schritt (S2) wird die Messeinheit (3) derart im Hohlraum (0) angeordnet, dass die erste Tragflächennormale (N1) in Radialrichtung in einem spitzen Winkel durch die erste radiale Öffnung (1.31) tritt und die zweite Tragflächennormale (N2) in Radialrichtung in einem spitzen Winkel durch die zweite radiale Öffnung (1.32) tritt.

14. Verfahren gemäss Anspruch 13, **dadurch gekennzeichnet, dass** im ersten Schritt (S1) eine Ableiteinheit (5) bereitgestellt wird, welche Ableiteinheit (5) einen Kontaktkörper (5.1) aus elektrisch isolierendem Material und dritte Kontaktstellen (5.31 - 5.33) und vierte Kontaktstellen (5.41 - 5.43) aus elektrisch leitfähigem Material aufweist, welcher Kontaktkörper (5.1) eine erste Kontaktfläche (5.11) und eine zweite Kontaktfläche (5.12) aufweist, welche erste Kontaktfläche (5.11) die dritten Kontaktstellen (5.31 - 5.33) trägt und welche zweite Kontaktfläche (5.12) die vierten Kontaktstellen (5.41 - 5.43) trägt, welche erste Kontaktfläche (5.11) eine erste Kontaktflächennormale (N1') aufweist, welche zweite Kontaktfläche (5.12) eine zweite Kontaktflächennormale (N2') aufweist; und dass im zweiten Schritt (S2) die Ableiteinheit (5) derart im Hohlraum (0) angeordnet wird, dass die erste Kontaktflächennormale (N1') in Radialrichtung in einem spitzen Winkel durch die erste radiale Öffnung (1.31) tritt und die zweite Kontaktflächennormale (N2') in Radialrichtung in einem spitzen Winkel durch die zweite radiale Öffnung (1.32) tritt.

15. Verfahren gemäss einem Anspruch 14, **dadurch gekennzeichnet, dass** die Leitungselemente (5.21 - 5.26, 5.61 - 5.64) erste Leitungselemente (5.21 - 5.26) und zweite Leitungselemente (5.61 - 5.64) umfassen, welche Durchführung (4) Kontaktstifte (4.2 - 4.5) aus elektrisch leitfähigem Material aufweisen und dass im fünften Schritt (S5) die ersten Leitungselemente (5.21 - 5.26) durch die radialen Öffnungen (1.31, 1.32) elektrisch mit den ersten Kontaktstellen (3.23 - 3.25) auf der erste Tragfläche (3.11) der Messeinheit (3) und den zweiten Kontaktstellen (3.33 - 3.35) auf der zweiten Tragfläche (3.12) der Messeinheit (3) sowie den dritten Kontaktstellen (5.31 - 5.33) auf der ersten Kontaktfläche (5.11) der Ableiteinheit (5) und den vierten Kontaktstellen (5.41 - 5.43) auf der zweiten Kontaktfläche (5.12) der Ableiteinheit (5) kontaktiert werden; und dass im fünften Schritt (S5) die zweiten Leitungselemente (5.61 - 5.64) durch die radialen Öffnungen (1.31, 1.32) elektrisch mit den dritten Kontaktstellen (5.31 - 5.33) auf der ersten Kontaktfläche (5.11) der Ableiteinheit (5) und den vierten Kontaktstellen (5.41 - 5.43) auf der zweiten Kontaktfläche (5.12) der Ableiteinheit (5) sowie den Stiftelementen (4.2 - 4.5) der Durchführung (4) kontaktiert werden.

16. Verfahren gemäss Anspruch 14, **dadurch gekennzeichnet, dass** die Ableiteinheit (5) fünfte Kontaktstellen (5.91 - 5.94) aus elektrisch leitfähigem Material aufweist, welcher Kontaktkörper (5.1) eine weitere Kontaktfläche (5.13) aufweist, welche weitere Kontaktfläche (5.13) an die erste und zweite Kontaktfläche (5.11, 5.12) grenzt, welche weitere Kontaktfläche (5.13) die fünften Kontaktstellen (5.91 - 5.94) trägt; welche Durchführung (4) einen Durchführungskörper (4.1) mit einer axialen Öffnung (4.10) und Stiftelementen (4.2 - 4.5) aus elektrisch leitfähigem Material aufweist; dass im ersten Schritt (S1) die Stiftelemente (4.2 - 4.5) elektrisch mit den fünften Kontaktstellen (5.91 - 5.94) kontaktiert werden; dass im ersten Schritt (S1) der Kontaktkörper (5.1) der Ableiteinheit (5) in der axialen Durchgangsöffnung (4.10) der Durchführung (4) befestigt wird; und dass im ersten Schritt (S1) der Durchführungskörper (4.1) auf das zweite Gehäuseende (1.2) gesetzt und an der Gehäusewandung (1.3) befestigt wird und die in der axialen Durchgangsöffnung (4.10) der Durchführung (4) befestigte Ableiteinheit (5) im Hohlraum (0) angeordnet wird.

17. Verfahren gemäss Anspruch 16, **dadurch gekennzeichnet, dass** die Leitungselemente (5.21 - 5.26, 5.61 - 5.64) erste Leitungselemente (5.21 - 5.26) umfassen, dass im fünften Schritt (S5) die ersten Leitungselemente (5.21 - 5.26) durch die radialen Öffnungen (1.31, 1.32) elektrisch mit den ersten Kontaktstellen (3.23 - 3.25) auf der ersten Tragfläche (3.11) der Messeinheit (3) und den zweiten Kontaktstellen (3.33 - 3.35) auf der zweiten Tragfläche (3.12) der Messeinheit (3) sowie den dritten Kontaktstellen (5.31 - 5.33) auf der ersten Kontaktfläche (5.11) der Ableiteinheit (5) und den vierten Kontaktstellen (5.41 - 5.43) auf der zweiten Kontaktfläche (5.12) der Ableiteinheit (5) kontaktiert werden.
